# FASCICULE DE BREVET EUROPEEN

(11) **EP 3 259 183 B1**
(45) Date de publication et mention de la délivrance du brevet: **10.04.2019**
(21) Numéro de dépôt: 16707880.7
(22) Date de dépôt: 08.02.2016
(51) Int. Cl.: B64C 29/00

(54) **AERODYNE VTOL A SOUFFLANTE(S) AXIALE(S) PORTEUSE(S)**
VTOL-AERODYN MIT UNTERSTÜTZENDEN AXIALGEBLÄSEN
VTOL AERODYNE WITH SUPPORTING AXIAL BLOWER(S)

(30) Priorité: 16.02.2015 FR 1551280
(43) Date de publication de la demande: 27.12.2017
(73) Titulaire: Hutchinson, 75008 Paris (FR)
(72) Inventeur: SIMON, Jean-Michel, 92320 Chatillon (FR); DOMINIAK, Christophe, 45290 Varennes-changy (FR); ANDRE, Sébastien, 45200 Montargis (FR)
(74) Mandataire: Cabinet Plasseraud
(86) Numéro de dépôt international: PCT/FR2016/050268
(87) Numéro de publication internationale: WO 2016/132040

(56) Documents cités:
- WO-A2-2012/063220
- DE-A1-102005 003 028
- DE-U1-202014 002 280
- US-A- 3 053 480
- US-A- 5 505 407
- US-A1- 2013 251 525

## Description

L'invention concerne un aérodyne à décollage et atterrissage vertical, du type dit VTOL (acronyme de l'expression anglo-saxonne Vertical Take-Off and Landing), dont la sustentation est assurée, en particulier au décollage et à l'atterrissage, par au moins une soufflante porteuse axiale, dont le rotor est entraîné autour d'un axe de rotation sensiblement vertical.

L'aérodyne selon l'invention est destiné à évoluer en altitude selon ses propres moyens sans nécessairement être relié au sol par une alimentation électrique ou un câble de pilotage par exemple. Il pourra être utilisé notamment comme transporteur de charges utiles, en particulier dans des zones géographiques difficiles d'accès, notamment à reliefs tourmentés, et/ou dépourvues d'infrastructures de communication.

Pour ces raisons, l'aérodyne selon l'invention doit présenter une architecture relativement simple, mais fiable, et être de réalisation relativement économique, et donc convenir mieux que les aérodynes analogues de l'état de la technique aux divers désidérata de la pratique.

En particulier, il existe des besoins importants d'aérodynes VTOL d'un faible encombrement au sol et de coûts d'acquisition et d'utilisation limités, capables de transporter des charges de l'ordre de 300kg, sur des distances de quelques dizaines à quelques centaines de km, et dont la masse à vide est limitée à 450kg en Europe, et à 650kg aux USA, pour entrer dans la catégorie des aérodynes dits ULM (ultra léger motorisé), avec une puissance installée de l'ordre de 120 à 130 kW pour entraîner l'hélice d'une soufflante porteuse d'un diamètre inférieur à 2,5m.

WO 2012/063220 et US 2013/0251525 décrivent des aérodynes à décollage et atterrissage vertical, de type dit VTOL, comprenant :
- une structure porteuse, à laquelle sont structurellement reliés :
- au moins une soufflante porteuse axiale, à axe de rotation sensiblement vertical et fixe par rapport à ladite structure porteuse, et apte à assurer la sustentation de l'aérodyne,
- au moins un groupe moto-sustentateur, comprenant au moins un moteur d'entraînement principal de ladite soufflante porteuse,
- au moins trois soufflantes d'attitude, aptes à commander l'attitude de l'aérodyne en roulis et tangage, chaque soufflante d'attitude étant une soufflante à motorisation électrique,
- chaque soufflante d'attitude étant fixée à l'un respectivement d'une pluralité de bras allongés, répartis en saillie latérale externe autour de ladite structure porteuse, à laquelle chaque bras est relié par une partie d'extrémité dite interne, de sorte que l'axe de rotation de chaque soufflante d'attitude est fixe par rapport à ladite structure porteuse, et que toutes les soufflantes d'attitude sont situées à l'extérieur du volume occupé centralement par ladite soufflante porteuse
- au moins une batterie d'alimentation des motorisations électriques des soufflantes d'attitude,
- un train d'atterrissage, fixé sous ladite structure porteuse, et
- au moins une nacelle, apte à supporter une charge utile et/ou ladite batterie.

L'invention propose un aérodyne du type présenté ci-dessus, qui se caractérise en ce que des volets de contrôle du lacet, réglables en incidence, sont portés par au moins un des bras porteurs des soufflantes d'attitude, et de préférence par le ou les bras porteurs orientés parallèlement au sens de déplacement de l'aérodyne.

Ainsi, lesdits volets peuvent efficacement assurer le contrôle de l'aérodyne en lacet, et en particulier améliorer la stabilité en vol transversal de l'aérodyne par celui ou ceux desdits volets qui sont portés par le ou les bras porteurs orientés parallèlement au sens de déplacement transversal de l'aérodyne.

Un avantage important de l'invention est que les fonctions de sustentation et d'équilibrage de l'aérodyne sont remplies par des moyens distincts, la sustentation étant assurée, en configuration de vol vertical, par la soufflante porteuse, dont l'axe de rotation est fixe par rapport à la structure, et l'équilibrage en roulis et tangage est essentiellement assuré par les soufflantes d'attitude, dans toutes les configurations de vol de l'aérodyne. Il n'est donc pas nécessaire de faire pivoter la soufflante porteuse pour réussir la transition entre le vol vertical (à l'atterrissage et au décollage) et le vol dit « horizontal » ou en translation, cette transition étant toujours le point faible des aérodynes VTOL, et la réalisation de la transmission, reliant le groupe moto-sustentateur au rotor de la soufflante porteuse s'en trouve considérablement simplifiée, d'où une fiabilité accrue, et allégée.

En outre, avantageusement, le centre de gravité dudit au moins un moteur d'entraînement principal est situé verticalement sous ladite soufflante porteuse et au-dessus du plan formé par des hélices desdites soufflantes d'attitude. Ainsi l'équilibrage de l'assiette de l'aérodyne est assuré, de manière rapide et efficace par les soufflantes d'attitude, écartées du centre de gravité de l'aérodyne, situé sur l'axe de la soufflante porteuse, par leurs bras porteurs, donnant aux soufflantes d'attitude des bras de leviers significatifs, surtout si chaque soufflante d'attitude est fixée à l'extrémité externe du bras porteur correspondant, de sorte que la motorisation électrique de chaque soufflante d'attitude peut être assurée par un petit moteur électrique rapide et réactif, facile à contrôler et piloter, par exemple par des circuits à modulation de largeur d'impulsion, de type dit PWM (Pulse Width Modulation), à partir de signaux de commande fournis par une centrale de pilotage et de navigation comportant notamment des capteurs tels que altimètre, accéléromètres, et instruments de navigation tels que gyroscopes, boussole, système GPS, etc.

Avantageusement, le moteur d'entraînement principal de la soufflante porteuse est un moteur à combustion interne (moteur thermique). Ce type de moteur a pour avantage de présenter un rapport élevé puissance délivrée sur poids, mais nécessite d'être alimenté en carburant depuis au moins un réservoir de carburant supporté par la structure porteuse.

Avantageusement de plus, ladite soufflante porteuse est une soufflante comprenant deux hélices multipales, coaxiales et contrarotatives, à pas fixe ou collectivement variable. Avantageusement, elle peut être aussi protégée par un carénage très ajouré (une protection) pour la préserver des contacts extérieurs sans nuire à une circulation transversale de l'air, et cette protection est supportée par la structure porteuse, de sorte que l'enveloppe de ladite protection ne supporte aucune charge directe susceptible de la déformer et de nuire au bon fonctionnement de la soufflante porteuse.

Les soufflantes d'attitude peuvent être non carénées. Mais, avantageusement, les soufflantes d'attitude sont des soufflantes carénées de façon à pouvoir générer une forte poussée dans un encombrement raisonnable notamment en situation d'avarie de la propulsion principale. Par contre, ladite au moins une soufflante porteuse est non carénée, mais, de préférence, protégée par une structure de protection ajourée.

Avantageusement encore, les soufflantes d'attitude comprennent chacune deux hélices multipales, coaxiales et contrarotatives, entraînées chacune par l'un respectivement de deux moteurs électriques distincts, de préférence de puissance sensiblement égale, ou entraînées collectivement par un ou des moteurs électriques.

Un point très important de l'invention est que, pour assurer la survie de l'aérodyne, en cas de défaillance du moteur d'entraînement principal de la soufflante porteuse, un moteur de secours et/ou d'appoint, de puissance plus faible que celle dudit au moins un moteur d'entraînement principal de ladite soufflante porteuse, de préférence de l'ordre de 25 % à 50 % de celle dudit moteur principal, est associé audit moteur principal, par une transmission, de préférence avec embrayage(s) et roue(s) libre(s) permettant d'appliquer sélectivement la somme des puissances dudit moteur principal et dudit moteur de secours et/ou d'appoint sur la soufflante porteuse, ou, en cas de panne dudit moteur principal, la seule puissance du moteur de secours et/ou d'appoint, la soufflante porteuse étant alors assistée par les soufflantes d'attitude, dont la motorisation électrique est dimensionnée pour permettre la prise en charge de l'aérodyne avec sa charge utile, les soufflantes d'attitude intervenant alors en soufflantes "de secours".

A cet effet, la section transversale ou surface totale des soufflantes d'attitude est importante et est supérieure à 35 %, et de préférence entre 60 % et 100 %, de la section transversale ou surface de la soufflante porteuse. Ceci permet de minimiser la puissance électrique nécessaire à cette opération de sauvetage et par conséquence, aussi la masse des batteries nécessaires pour alimenter les moteurs électriques pendant le temps nécessaire au sauvetage. En particulier, quand la section totale des soufflantes d'attitude est supérieure à 70 % de la surface de la soufflante porteuse, le poids des équipements électriques (essentiellement les moteurs électriques et les batteries d'alimentation de ces moteurs) peut être optimal tout en gardant une soufflante principale de taille raisonnable. Le moteur de secours et/ou d'appoint peut être un petit moteur thermique ou électrique. Dans ce dernier cas, sa puissance et celle des moteurs électriques des soufflantes d'attitude apportent un surcroît de puissance insensible à l'altitude au cours du vol de l'aérodyne. L'assistance ainsi procurée par le moteur de secours et/ou d'appoint ainsi que par les soufflantes d'attitude peut être déterminante dans une phase délicate du vol au cours d'une opération à haute altitude. De même, il est avantageux que la soufflante porteuse entraînée par le moteur de secours et/ou d'appoint et les soufflantes d'attitude aient des densités surfaciques de puissance respectivement p'1 et p2 telles que 0,5 x p'1 < p2 < 1,5 x p'1. Ainsi, ces densités surfaciques auront des valeurs relativement proches l'une de l'autre. Il faut souligner ici le caractère non linéaire du dimensionnement des moteurs électriques et des batteries. En dessous d'une section minimale des soufflantes d'attitude et de secours le dimensionnement peut diverger. Il est donc particulièrement important de respecter un seuil de dimensionnement (70 % de la surface de la soufflante porteuse) dans le choix de la surface des soufflantes dites de secours et d'attitude.

Avantageusement, ledit groupe moto-sustentateur comprend au moins deux moteurs ou groupes de moteurs de puissance sensiblement équivalente, comportant chacun en série, avant ou en amont d'une transmission de puissance à la soufflante porteuse, un embrayage et une roue libre de façon à ce que, lorsqu'un moteur ou groupe de moteurs est en panne, l'entraînement de la soufflante porteuse est assuré par l'autre moteur ou groupe de moteurs en "débrayant" le moteur ou groupe de moteurs en panne.

Dans ce cas, avantageusement, les deux moteurs ou groupes de moteurs sont gérés selon une commande du type "maître-esclave".

Avantageusement dans ce cas, d'une part, les deux moteurs thermiques sont de puissance sensiblement équivalente et d'autre part la section ou surface totale des soufflantes d'attitude est supérieure à 70 % de la section ou surface de la soufflante porteuse, ceci afin comme dans la situation précédente de minimiser à la fois, la puissance électrique et aussi la masse des batteries nécessaires pour gérer cette situation.

Dans une architecture avec deux moteurs ou groupes de moteurs dans le groupe motopropulseur, et lorsque la soufflante porteuse comprend deux hélices multipales coaxiales et contrarotatives, chaque moteur ou groupe de moteurs peut avantageusement entraîner respectivement l'une desdites deux hélices, en évitant ainsi une transmission contrarotative.

A ce stade de l'exposé et pour mieux comprendre l'intérêt de l'architecture originale proposée pour l'aérodyne, il faut préciser les points suivants :
A puissance motrice et diamètre de soufflante égaux, on obtient une poussée sensiblement plus importante en « carénant » les soufflantes. Le gain de poussée peut être supérieur à 30 % par rapport à une soufflante non carénée. Pour cette raison, de nombreux engins de petites tailles comme des « UAV » sont proposés avec des carénages. Voir par exemple : US 5 419 513 A (United Technologies Corp.) ou bien US 6 691 949 B2 (Plump et al.)
Cependant, en présence d'un vent latéral, en imposant au flux d'air une direction fixe sensiblement verticale, les soufflantes carénées sont soumises à un effort latéral important appelé « trainée de captation » (momentum drag en anglais) dont l'intensité est proportionnelle au débit de la soufflante carénée et à la vitesse du vent latéral, et dont le point d'application est situé au-dessus du plan de la soufflante carénée, ce qui génère un moment dit « cabreur » sur la soufflante carénée.

Pour contrer les effets néfastes de ce moment dit cabreur, la principale solution consiste à placer le centre de gravité de l'aérodyne sensiblement au-dessus du plan de la soufflante carénée de façon à réduire le «bras de levier » du moment cabreur. C'est ce qui est fait dans les petits UAV utilisant ce système.

On comprend tout de suite que dans le cas de soufflantes de grand diamètre comme la soufflante porteuse, cette option n'est plus applicable : le débit est important, donc le couple cabreur très important, et il serait très difficile de placer le centre de gravité au-dessus du plan de ladite soufflante porteuse car cela imposerait de placer à la fois la motorisation et la charge utile au-dessus du plan de la soufflante porteuse.

Comme on le verra par la suite, l'architecture de l'aérodyne proposée, dans lequel la soufflante porteuse est non carénée, les soufflantes d'attitude (et de secours) sont carénées pour réduire la consommation électrique, et le centre de gravité est placé sous la soufflante porteuse et au niveau ou au-dessus des carénages des soufflantes d'attitude, offre un compromis nouveau et performant pour le transfert aérien de charges.

Dans un premier mode principal de réalisation, la soufflante porteuse comprend deux hélices multipales, coaxiales et contrarotatives autour de leur axe de rotation commun. Ceci permet à chacune des deux hélices contrarotatives d'équilibrer le couple de rotation de l'autre. Mais, pour faire l'économie d'une hélice et de l'entraînement contrarotatif des deux hélices, qui peut être un facteur de complexité et de coût, selon un second mode de réalisation, la soufflante porteuse comprend au moins une hélice multipales, et de préférence une unique hélice multipales. Les hélices simple ou doubles et contrarotatives de la soufflante porteuse ont soit un pas fixe, soit un pas collectif variable. En effet, contrairement aux hélicoptères, la présence des soufflantes d'attitude nous dispense de la nécessité d'avoir une commande de pas cyclique sur les hélices.

Avantageusement encore, en aval de la ou des hélices multipales de ladite soufflante porteuse, lesdits volets réglables en incidence pour le contrôle du lacet sont aptes à ajuster le redressement du flux d'air en sortie de ladite soufflante porteuse. Ainsi, cet ensemble de volets permet d'adapter le couple redresseur aux variations du couple en réaction au couple d'entraînement de ladite ou desdites hélices.

Dans le cas où la soufflante porteuse ne comprend qu'une hélice multipales, à pas fixe ou à pas variable, sans redresseur, avantageusement certains au moins desdits volets réglables en incidence pour le contrôle du lacet et portés par au moins un des bras porteurs des soufflantes d'attitude, équilibrent le couple moteur.

Dans tous les modes de réalisation et toutes les variantes présentés ci-dessus, avantageusement les soufflantes d'attitude carénées sont fixées sur leurs bras porteurs de sorte que les centres de poussée desdites soufflantes d'attitude soient sensiblement dans un plan horizontal sensiblement en dessous du centre de gravité de l'aérodyne, de façon à ce que le moment de captation précédemment cité, qui s'exerce sur le carénage des soufflantes d'attitude en situation de vent latéral, soit peu important, car ayant un bras de levier faible par rapport au centre de gravité de l'aérodyne. Il peut ainsi être facilement maîtrisé (compensé) par le couple exercé par lesdites soufflantes d'attitude.

Alternativement, quand l'aérodyne est destiné à un service en présence de vents très violents, on peut utiliser des soufflantes d'attitude non carénées avec pour conséquence une charge utile réduite toutes choses égales par ailleurs (même motorisation, même encombrement).

Pour diminuer l'encombrement au sol de l'aérodyne, lorsqu'il est hors service, et/ou pour faciliter son transport, les bras porteurs des soufflantes d'attitude sont repliables et/ou démontables, lorsque l'aérodyne est posé.

Avantageusement, la charge du disque de la soufflante porteuse (T/A1) est comprise entre 450N/m2 et 750 N/m2.

Avantageusement, des composants électriques et électroniques de l'aérodyne, comprenant au moins les moteurs électriques et batteries d'alimentation des soufflantes d'attitude, ainsi que des contrôleurs de commande des moteurs, des connecteurs de liaison desdites batteries auxdits moteurs et au moins un alternateur de recharge de batteries sont regroupés dans une enceinte fermée, de préférence thermostatée, agencée en zone sensiblement centrale de ladite structure porteuse, et reliée à chaque soufflante d'attitude, pour l'entraînement de sa ou ses hélices, par une transmission mécanique à arbre tournant, comportant, de préférence, un raccord à joint de cardan permettant le repliage ou rabattement d'au moins une partie dudit arbre tournant avec au moins une partie dudit bras porteur correspondant, et par rapport à ladite structure porteuse.

Afin de procurer un bon contrôle de l'aérodyne en vol, avantageusement, un bras porteur de soufflante d'attitude situé dans un plan défini par l'axe de rotation de la soufflante porteuse et par l'axe de déplacement de l'aérodyne et en arrière de l'aérodyne est aussi porteur d'un empennage horizontal et le cas échéant d'un empennage vertical. L'aérodyne est ainsi agencé de façon à soulager le travail de ladite soufflante d'attitude en situation de déplacement longitudinal de l'aérodyne avec son empennage horizontal et à orienter l'aérodyne dans le sens du déplacement, ou du vent relatif, avec l'empennage vertical.

Afin d'améliorer les performances aérodynamiques de l'aérodyne, avantageusement, la partie périphérique amont du carénage desdites soufflantes d'attitude est renflée radialement vers l'extérieur sur sa périphérie et selon un profil arrondi et convexe, apte à réduire le coefficient de traînée par rapport à un vent relatif latéral, la partie aval dudit carénage ayant une face externe sensiblement cylindrique de section transversale circulaire.

D'autres caractéristiques et avantages de l'invention ressortiront de la description donnée ci-dessous, à titre non limitatif, d'exemples de réalisation décrits en référence aux dessins annexés sur lesquels :
- la figure 1 est une vue en perspective d'un exemple d'aérodyne selon l'invention équipé d'une soufflante porteuse entraînée par un moteur thermique et stabilisé par quatre soufflantes électriques carénées, portées par quatre bras dont deux sont munis de volets de stabilisation en lacet ;
- la figure 2 est une vue de dessus de l'aérodyne de la figure 1 ;
- la figure 3 est une vue de dessus d'un autre exemple d'aérodyne de même type, mais comportant uniquement trois soufflantes électriques carénées portées par trois bras ;
- la figure 4 est une vue en élévation latérale d'un aérodyne selon l'invention en déplacement horizontal ;
- la figure 5 est une vue de côté d'un aérodyne selon l'invention avec une charge utile suspendue ;
- la figure 6 est une vue schématique en coupe d'une soufflante électrique avec carénage ;
- la figure 7 est une vue schématique en coupe d'une soufflante électrique sans carénage ;
- les figures 8 et 8a sont respectivement une vue de côté d'un aérodyne selon l'invention avec volets de contrôle en lacet et une vue en coupe (selon Xa de la figure 8) d'un volet de contrôle en lacet ;
- les figures 9 et 9a sont respectivement une vue de côté d'un aérodyne selon l'invention équipé d'une soufflante porteuse à hélice unique et d'un contrôle anti couple par lesdits volets de contrôle en lacet et une vue en coupe d'un volet ;
- les figures 10 et 11 sont des vues de dessus d'un aérodyne selon l'invention avec empennage et volets de contrôle en lacet en version avec respectivement quatre (Fig. 10) et trois (Fig.11) soufflantes électriques ;
- la figure 12 est une vue schématique d'une soufflante porteuse avec un groupe motopropulseur à deux moteurs et d'une soufflante électrique ;
- la figure 13 est un diagramme montrant l'évolution d'un index proportionnel au poids de l'ensemble des équipements électriques en fonction du choix du ratio de surfaces entre la surface des soufflantes électriques et celle de la soufflante porteuse ;
- la figure 14 est une vue schématique analogue à la figure 12 d'une soufflante porteuse avec un groupe motopropulseur à deux moteurs et d'une soufflante électrique ;
- la figure 15 est un diagramme montrant des zones d'exclusion en fonction des choix de charge rotorique (T/A1) et de ratio de surfaces entre les soufflantes électriques et la soufflante principale (A2/A1) ;
- la figure 16 est une vue en coupe schématique d'un aérodyne selon l'invention équipé d'une soufflante porteuse avec deux hélices contrarotatives entraînées chacune par l'un respectivement de deux groupes motopropulseurs distincts, de soufflantes électriques à deux hélices contrarotatives et de volets de contrôle de lacet ;
- la figure 17 est une vue schématique analogue à la figure 14, et représente un ensemble motopropulseur avec soufflante porteuse à deux hélices contrarotatives et une soufflante d'attitude de l'aérodyne de conception proche de celle de la figure 16 ; et
- la figure 18 est une vue schématique analogue à celle de la figure 17, mais avec quatre moteurs d'entraînement de la soufflante porteuse au lieu de deux, et une soufflante d'attitude non carénée.

### Description des Figures :

Sur les figures annexées, les mêmes références alphanumériques désignent des organes identiques ou analogues, ou qui remplissent les mêmes fonctions.

Les termes tels que "vertical", "horizontal", "au-dessus", "au-dessous", et autres utilisés pour indiquer des positions relatives d'organes ne doivent pas être compris dans leur sens absolu, mais sont utilisés dans la description qui suit pour décrire l'aérodyne et ses composants lorsqu'il est posé sur un sol plat et horizontal, après son atterrissage ou avant son décollage à la verticale.

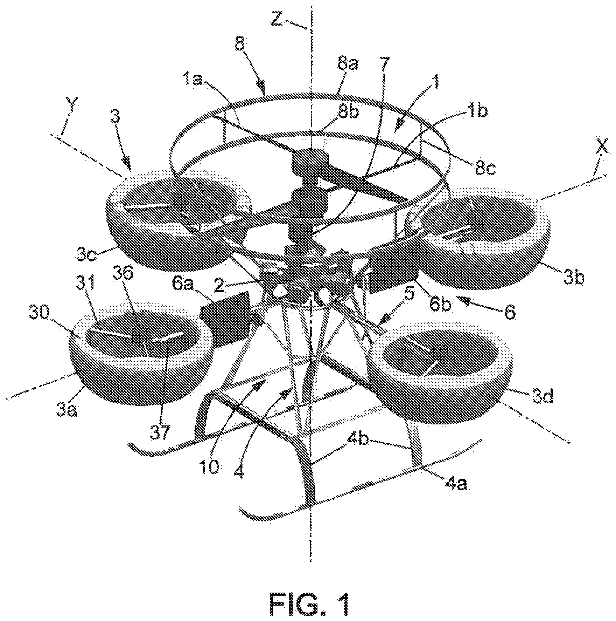

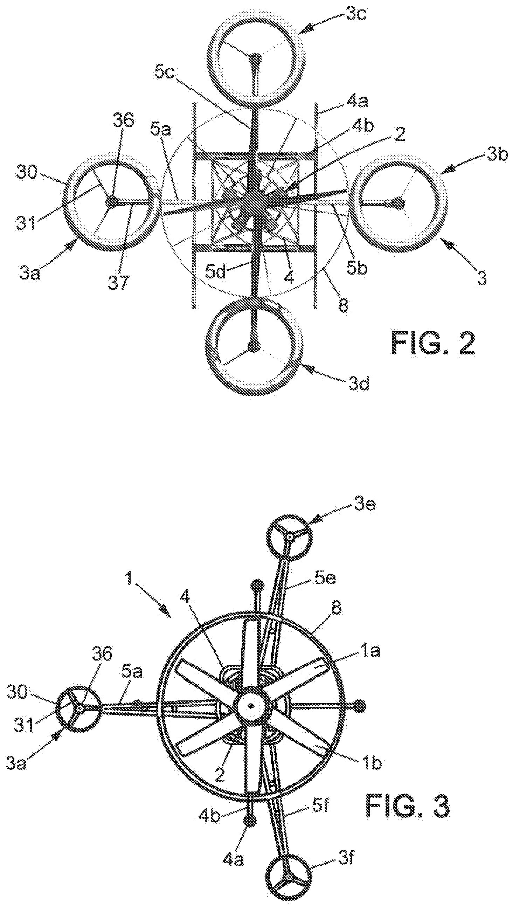

La figure 1 est une vue en perspective d'un premier exemple d'aérodyne selon l'invention, dont une vue de dessus est représentée sur la figure 2, et qui est équipé en partie haute d'une soufflante axiale porteuse 1 ou sustentatrice, d'axe Z vertical, protégée, de préférence, par une structure 8 très ajourée et légère de protection, et entraînée par un moteur thermique 2, qui est, dans cet exemple, un moteur à combustion interne à pistons radiaux en étoile, supporté sous la soufflante porteuse 1 par une structure porteuse 4, qui supporte également la soufflante porteuse 1, et qui est équipée d'un train d'atterrissage, dans cet exemple à deux patins 4a parallèles et horizontaux, fixés chacun à l'extrémité inférieure de deux respectivement de quatre jambes élastiquement déformables 4b solidarisées par leur partie d'extrémité supérieure à la structure porteuse 4. L'aérodyne est stabilisé en roulis et tangage par une pluralité de soufflantes d'attitude axiales 3, qui comprend dans cet exemple quatre soufflantes électriques carénées identiques 3a, 3b, 3c et 3d, portées chacune par l'un respectivement de quatre bras 5 sensiblement horizontaux et radiaux par rapport à l'axe Z, fixés à la structure porteuse 4 et répartis en saillie latérale vers l'extérieur et autour de cette structure porteuse 4. Deux au moins des bras 5 sont équipés de volets 6 orientables en incidence, pour la stabilisation de l'aérodyne en lacet, autour de l'axe de lacet, qui est l'axe vertical Z de la soufflante porteuse 1, fixe par rapport à la structure porteuse 4. De même, les soufflantes d'attitude 3 sont fixes par rapport à la structure porteuse 4, et les axes de rotation de leurs hélices sont parallèles entre eux et à l'axe Z. Les soufflantes d'attitude 3 sont chacune supportée à la partie d'extrémité radiale externe d'un bras 5 correspondant, fixé à la structure porteuse 4 par sa partie d'extrémité radiale interne, de sorte que toutes les soufflantes d'attitude 3 sont situées à l'extérieur et autour du volume occupé centralement par la soufflante porteuse 1, le moteur 2 et la structure porteuse 4, qui délimite, sous le moteur 2 et les bras 5, une nacelle 10, pour supporter une charge utile, et loger le réservoir (non représenté) de carburant alimentant le moteur 2 et la ou les batteries électriques (également non représentées) d'alimentation des moteurs électriques d'entraînement de la ou des hélices des soufflantes d'attitude 3.

Dans cet exemple, chaque soufflante d'attitude 3, telle que la soufflante 3a, comprend un carénage annulaire 30, à l'intérieur duquel une hélice tripales 31 est entraînée en rotation par un moteur électrique 36 supporté au centre du carénage 30 et centré sur l'axe de rotation de l'hélice 31 par un bras 37 de support et d'alimentation.

Le but de l'invention est de concevoir un aérodyne qui puisse manipuler des charges significatives, plusieurs dizaines, voire centaines de kilogrammes, pendant un temps assez long, supérieur à une heure, tout en conservant une bonne stabilité en rafale de vent latérale, une excellente manoeuvrabilité avec des temps de réaction très courts ainsi qu'une grande sécurité en cas de panne, notamment de panne du moteur 2. Pour atteindre ce but, la fonction de sustentation est assurée par la soufflante porteuse 1 qui comprend deux hélices bipales la et 1b, coaxiales et contrarotatives autour de l'axe Z, à pas fixe ou à pas collectif, et non carénées. Pour ne pas surcharger les figures, les éventuelles commandes de pas collectif des hélices n'ont pas été représentées. En revanche une commande de pas cyclique est complexe et n'est pas nécessaire car cette fonction est remplie par les soufflantes d'attitude.

On connaît le niveau élevé de performances des hélices contrarotatives, notamment utilisées dans des hélicoptères comme les hélicoptères russes « Kamov ». L'emport de charges plus lourdes, la compacité, une meilleure stabilité liée à une symétrie de portance, une moindre sensibilité aux rafales de vent, des performances accrues (plafond de vol, vitesse ascensionnelle..) sont des atouts majeurs des hélices contrarotatives. Cependant, il faut bien reconnaitre que ce principe s'est peu répandu. En effet, la complexité mécanique de deux hélices contrarotatives équipées chacune de pas variables et de plateaux cycliques a rebuté la plupart des fabricants d'hélicoptères. Dans le cas de l'aérodyne objet de l'invention, cette contradiction est résolue, dans la soufflante porteuse 1, par l'usage conjoint de deux hélices contrarotatives 1a et 1b dont le pas est fixe ou collectivement variable, et qui ne sont pas pourvues de plateaux cycliques, donc très simples, et de soufflantes d'attitude électriques 3a, 3b, 3c, 3d portées par des bras 5 suffisamment longs pour que le couple de stabilisation exercé par lesdites soufflantes électriques 3a, 3b, 3c, 3d soit grand sans pour autant nécessiter de moteurs électriques 36 puissants, qui seraient trop consommateurs de puissance électrique et demanderaient d'emporter des batteries lourdes qui seraient préjudiciables à la charge utile de l'aérodyne.

Pour résoudre l'exigence recherchée de manipuler des charges lourdes pendant un temps long, tout en conservant une manoeuvrabilité et une bonne stabilité notamment en rafale de vent, l'aérodyne objet de l'invention est, d'une part, motorisé au niveau de la soufflante porteuse 1 par un ou des moteurs 2 à combustion interne de type moteur thermique (à deux ou quatre temps, ou à pistons rotatifs de type Wankel...), ou bien de type turbine à gaz, dont on connaît les excellents rapports poids/puissance et poids/endurance, et, d'autre part, au niveau des soufflantes d'attitude ou de stabilisation 3a, 3b, 3c, 3d par des moteurs électriques 36 dont on connaît aussi l'excellence au niveau de la souplesse, de la précision et de la rapidité de réponse. L'inconvénient majeur des moteurs électriques est le poids de l'ensemble moteur + batteries. La longueur des bras porteurs 5 est un élément pour limiter la puissance des moteurs électriques 36, mais il est expliqué ci-après qu'il est aussi impératif de bien choisir le diamètre des rotors ou hélices des soufflantes électriques, et notamment le rapport de la surface totale A1 des rotors ou hélices 31 des soufflantes électriques 3a, 3b, 3c, 3d à la surface A0 du ou des rotors ou hélices 1a et 1b de la soufflante porteuse 1. La transmission de puissance entre le ou les moteurs thermiques 2 et ladite soufflante porteuse 1, s'effectue par une transmission contrarotative 7.

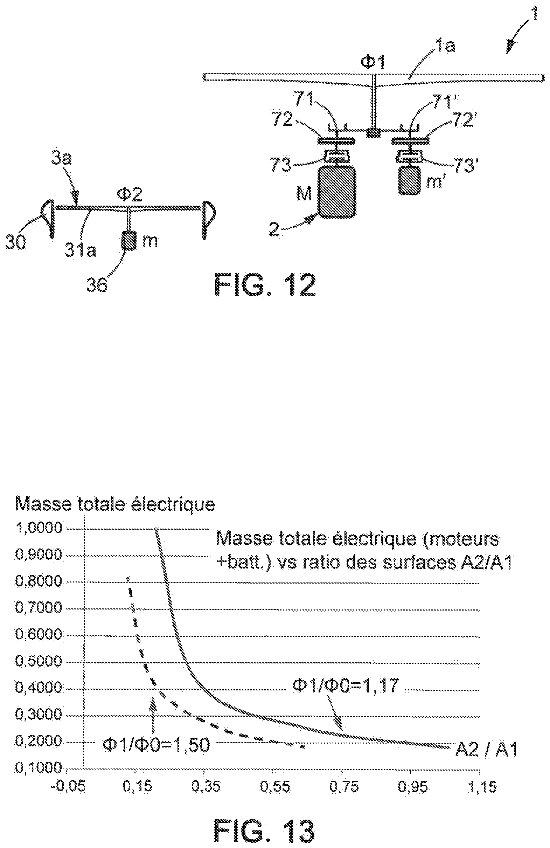

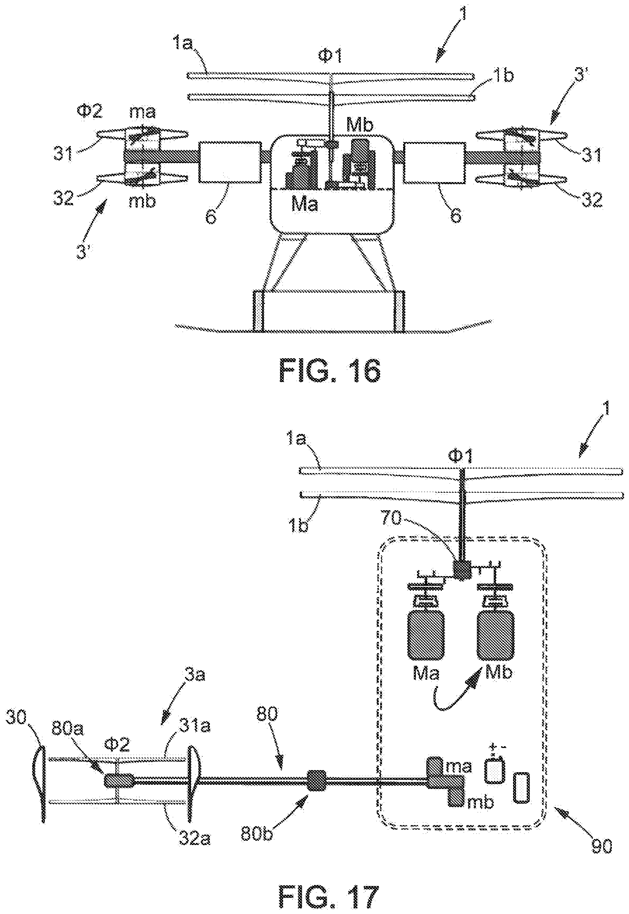

Une des caractéristiques majeures de l'aérodyne selon l'invention concerne la sécurité en cas de panne notamment du ou d'un moteur 2 de ladite soufflante porteuse 1. A cet effet les soufflantes de stabilisation 3a, 3b, 3c, 3d sont dimensionnées pour contribuer significativement à la portance de l'aérodyne en situation d'avarie, et ces soufflantes peuvent être capables de porter à elles seules au minimum le poids de la structure de l'aérodyne, c'est à dire sans sa charge utile. Cela est possible, d'une part, parce que cette situation ne dure pas dans le temps (atterrissage rapide, autonomie de quelques minutes), que, d'autre part, le choix a été fait de dimensionner les rotors ou hélices 31 des soufflantes de stabilisation 3a, 3b, 3c, 3d qui, en l'occurrence, sont des soufflantes de secours ou survie dans cette situation, de façon adéquate comme expliqué ci-après en référence notamment à la figure 13, et que, enfin, lesdites soufflantes d'attitude et de survie, dans cette situation, sont soit complètement carénées 30 comme sur la figure 1, soit réalisées elles-mêmes avec des hélices contrarotatives libres comme sur la figure 16, soit avec une combinaison d'hélices contrarotatives et carénées comme sur la figure 17, de façon à ce que leur rendement de poussée de sustentation soit excellent.

Pour être parfaitement efficaces en toutes situations, il est préférable que lesdites soufflantes de stabilisation et/ou de survie 3a, 3b, 3c, 3d soient placées au minimum à l'extérieur du cercle projeté de ladite soufflante porteuse 1 comme on peut le voir clairement sur la figure 2, voire plus excentré encore comme sur la figure 3.

Dans l'exemple des figures 1 et 2, les quatre soufflantes d'attitude sont réparties en deux paires de soufflantes diamétralement opposées de part et d'autre de l'axe Z, comme 3a et 3b dans une paire, et 3c et 3d dans l'autre, l'axe horizontal passant par les centres des soufflantes 3a et 3b étant l'axe de roulis X perpendiculaire à l'axe Z et l'axe horizontal passant par les centres des soufflantes 3c et 3d étant l'axe de tangage Y de l'aérodyne, perpendiculaire aux axes Z et X. Les volets 6 de contrôle du lacet sont deux volets 6a et 6b montés pivotants en incidence chacun autour de l'un respectivement des bras 5a et 5b des soufflantes 3a et 3b, dans le flux de sortie de la soufflante porteuse 1.

De plus, les patins 4a du train d'atterrissage sont parallèles à l'axe X. En variante, les patins 4a peuvent être équipés de roulettes, ou remplacés par des roulettes.

Une autre caractéristique majeure de l'invention est que, dans le cas où lesdites soufflantes de survie ou de stabilisation 3a, 3b, 3c, 3d sont carénées, le centre de gravité du ou des moteurs 2 d'entraînement de la soufflante porteuse 1 est situé verticalement sous ladite soufflante porteuse 1 et au-dessus du plan supérieur d'entrée d'air du carénage 30 desdites soufflantes de survie ou de stabilisation 3a, 3b, 3c, 3d, de façon à positionner le centre de gravité de l'aérodyne verticalement à proximité des entrées d'air desdites soufflantes de stabilisation 3a, 3b, 3c, 3d et donc de minimiser le couple exercé par la traînée de captation en situation de vent latéral comme expliqué ci-dessus. Il faut noter que ceci n'est rendu possible que par le choix d'architecture fait pour cet aérodyne. En effet, par exemple, si on avait souhaité caréner la soufflante principale porteuse 1, il aurait été matériellement très difficile, voire impossible, de positionner le centre de gravité au-dessus de l'entrée d'air de ladite soufflante porteuse 1 comme cela se fait dans certains drones.

Enfin, la structure porteuse 4 de l'aérodyne selon l'invention est de préférence réalisée sous forme de treillis tubulaire, et la protection 8 de la soufflante porteuse 1 est constituée de deux cerceaux rigides circulaires de même diamètre, coaxiaux autour de l'axe Z, et parallèles l'un à l'autre perpendiculairement à l'axe Z, et le cerceau supérieur 8a est relié rigidement au cerceau inférieur 8b par quatre entretoises axiales 8c, réparties sur la périphérie de la protection 8, très ajourée et délimitant un volume cylindrique à l'intérieur duquel tournent les hélices 1a et 1b de la soufflante porteuse 1. Par souci de clarté, la charge utile ainsi que son accrochage sur la structure porteuse 4 n'ont pas été représentés sur les figures 1 et 2.

La figure 3 est une vue de dessus d'un second exemple d'aérodyne selon l'invention, analogue à celui des figures 1 et 2 sauf qu'il ne comporte que trois bras 5a, 5e, 5f et trois soufflantes électriques de stabilisation 3a, 3e, 3f, et que les hélices contrarotatives 1a et 1b de la soufflante porteuse 1 sont des hélices tripales au lieu d'hélices bipales. A ce titre, soulignons ici que les deux hélices contrarotatives peuvent avoir chacune deux, trois ou n pales et que d'une part, elles n'ont pas nécessairement le même nombre de pales et que d'autre part elles peuvent avoir des diamètres différents.

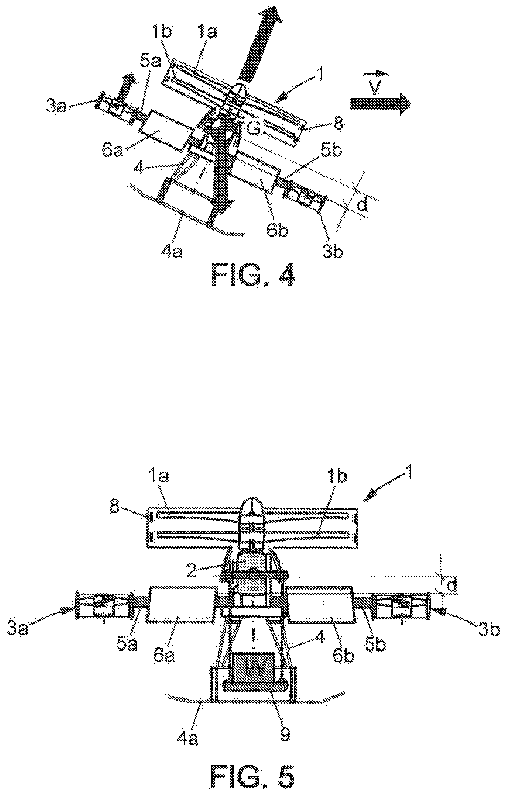

La figure 4 est une vue de profil d'un autre exemple d'aérodyne selon l'invention, de configuration voisine de celle des figures 1 et 2, en cours d'évolution horizontale avec une vitesse *̅V̅*̅ L'inclinaison impulsionnelle est donnée par l'une des soufflantes de stabilisation, 3a par exemple. On voit, comme expliqué pour la figure 1, que le centre de gravité G est situé sous la soufflante porteuse 1 et au-dessus, à une distance d, du plan d'entrée d'air des carénages desdites soufflantes de stabilisation 3a, 3b, 3c, 3d.

La figure 5 est une vue de côté d'encore un autre exemple d'aérodyne selon l'invention, avec une charge utile W suspendue par un assemblage articulé 9 qui peut débattre comme un parallélogramme articulé dans le plan X-Z et dans le plan Y-Z avec une limitation angulaire, procurée par des butées amorties par exemple, qui l'autorise à débattre de ± 25° dans les deux plans précédents, et ayant une attache articulée à sa partie supérieure dans une zone proche du centre de gravité de l'aérodyne hors charge utile, de façon à conserver une position relativement stable du centre de gravité quel que soit la charge et l'inclinaison de l'aérodyne (dans la limite de ± 25°).

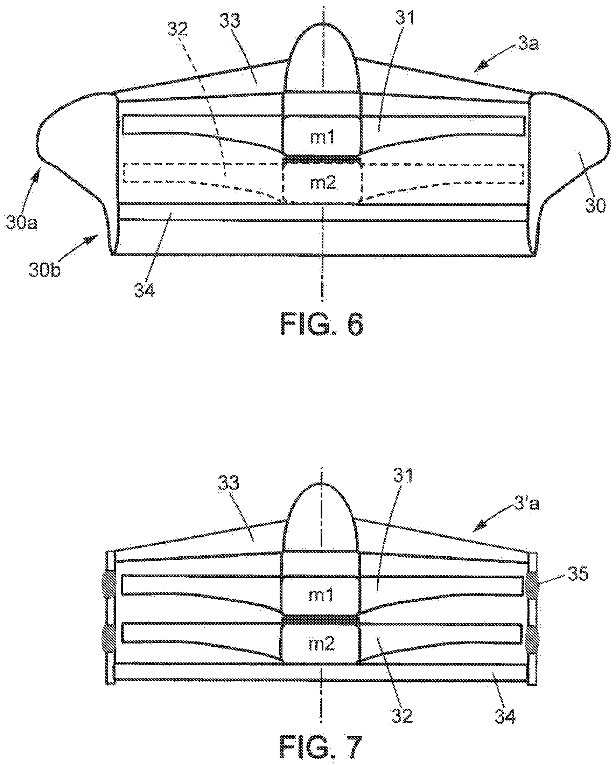

Les figures 6 et 7 représentent deux vues schématiques en coupe d'une soufflante électrique de stabilisation et/ou de secours.

La figure 6 montre une soufflante 3a carénée et la figure 7 une variante 3'a non carénée. Dans la version carénée de la figure 6, ladite soufflante de stabilisation et/ou de secours 3a comporte un carénage 30, des bras radiaux supérieurs 33 et inférieurs 34 de tenue du carénage 30 et au minimum une hélice multipales 31, dite supérieure car logée dans la partie haute ou amont du carénage 30, et mue par un moteur électrique m1. Le cas échéant, pour améliorer encore la performance, on peut lui adjoindre une seconde hélice multipales inférieure 32 (représentée en « pointillés » sur la figure 6) contrarotative par rapport à l'hélice supérieure 31 et mue elle-même par un autre moteur électrique m2 Afin d'améliorer les performances aérodynamiques de l'aérodyne, avantageusement, la partie périphérique amont 30a du carénage 30 de ladite soufflante 3a électrique de stabilisation et/ou de secours est renflée radialement vers l'extérieur sur sa périphérie et selon un profil arrondi et convexe, apte à réduire le coefficient de traînée par rapport à un vent relatif latéral, la partie aval 30b dudit carénage ayant une face externe sensiblement cylindrique de section transversale circulaire.

La figure 7 montre sensiblement la même soufflante d'attitude 3'a avec une simple protection 35 contre les chocs, par exemple analogue à la protection 8 de la soufflante porteuse 1, et ses bras de fixation supérieurs 33 et inférieurs 34. La protection 35 doit être très transparente à un vent latéral, et n'a pour fonction que d'éviter simplement un contact direct d'une hélice 31 ou 32 avec un obstacle latéral. Mais, dans cette réalisation, et pour conserver un bon rendement de sustentation, notamment en situation de survie, où les soufflantes électriques telles que 3'a jouent un rôle déterminant de sauvetage de l'aérodyne, on aura un grand intérêt à avoir une deuxième hélice multipales contrarotative 32 motorisée par un moteur m2.

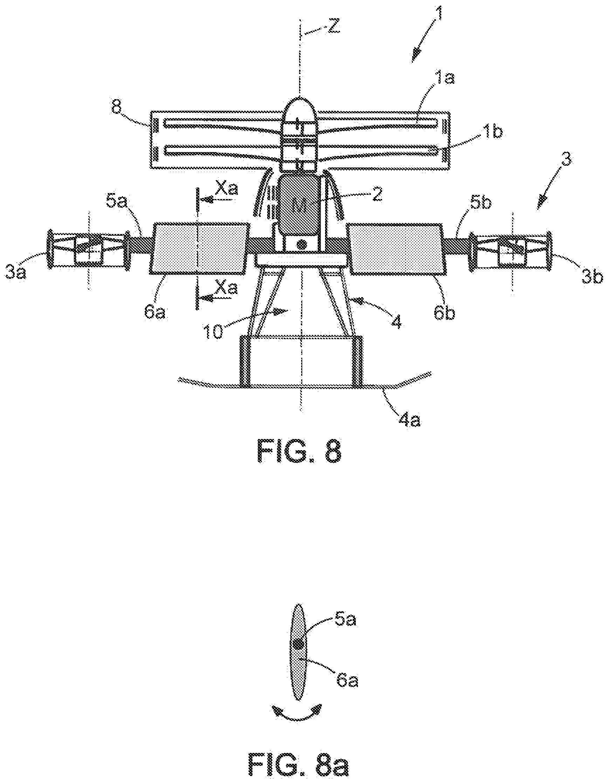

La figure 8 est une vue de côté d'un aérodyne selon l'invention, analogue à celui de la figure 4, avec, en particulier, des volets 6a et 6b portés par les bras 5a et 5b et articulés autour de ceux-ci, en étant commandés en incidence, comme on peut le voir sur la coupe Xa-Xa en figure 8a. Les volets 6a, 6b sont placés impérativement dans le flux sortant de la soufflante porteuse 1, et servent principalement à contrôler le lacet de l'aérodyne autour de l'axe vertical Z. Les volets 6a et 6b sont portés par au moins un bras 5, ou par deux bras opposés, tels que 5a et 5b, ou par les quatre bras (ou trois, s'il n'y a que trois bras car seulement trois soufflantes d'attitude 3). Dans le cas où deux volets opposés 6a et 6b par exemple, sont actionnés en rotation de sens opposés, les volets servent à contrôler le lacet dans un sens ou dans l'autre selon l'inclinaison. Dans le cas où les volets sont actionnés en rotation dans le même sens, ils peuvent servir à produire un angle de tangage ou de roulis selon le couple de volets actionnés, en support à l'action des soufflantes électriques de stabilisation 3a à 3d, et ensuite à maintenir cet angle de roulis ou tangage si nécessaire pour soulager le travail des soufflantes électriques 3a à 3d, et surtout la charge des batteries. Par exemple, sur la figure 8, si l'axe X d'avance de l'aérodyne est défini par les bras 5a et 5b comme sur la figure 1, cet axe X est l'axe de roulis, et l'axe Y perpendiculaire au plan de la figure, et défini par les bras 5c et 5d (non représentés), est l'axe de tangage. Dans ce cas, si les volets 6a et 6b pivotent solidairement, ils vont induire, par réaction de portance dans le flux d'air de la soufflante 1, un roulis à droite ou à gauche selon leur sens de pivotement, et s'ils pivotent en sens opposés, ils induiront un lacet dans un sens ou dans l'autre autour de l'axe vertical Z. De même pour des volets 6c et 6d qui seraient portés par des bras 5c et 5d (non représentés sur la figure 8), qui induiront, par un pivotement solidaire, un tangage autour de l'axe Y, et par des pivotements opposés, un lacet autour de l'axe Z.

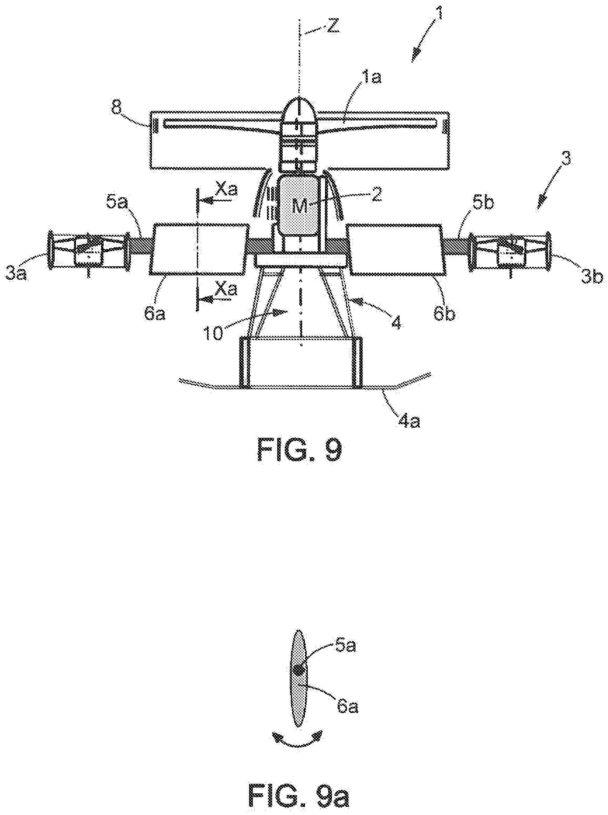

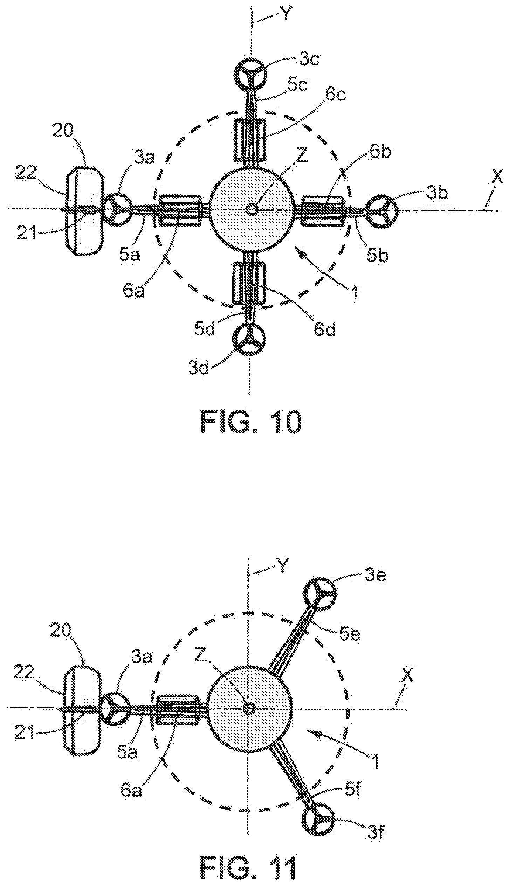

Les figures 9 et 9a sont identiques aux figures 8 et 8a, à l'exception de ladite soufflante porteuse 1 qui, dans ce cas, ne comporte qu'une seule hélice multipales la. Le rendement de sustentation est moins bon dans ce cas que dans la configuration de la figure 8, et le couple d'entraînement de l'hélice unique 1a, qui n'est pas équilibré par celui d'une hélice contrarotative, doit être compensé au niveau des volets orientables 6a, 6b, 6c, 6d (6c et 6d étant portés par les bras perpendiculaires 5c et 5d non représentés). Cette configuration, moins performante en sustentation, permet néanmoins de simplifier l'architecture de l'aérodyne : pas d'hélice contrarotative, pas de boîte de transmission contrarotative. Cependant, les volets 6a, 6b, 6c, 6d doivent être surdimensionnés pour équilibrer le couple moteur. Pour atteindre ce but, les volets peuvent être doublés comme représenté sur la figure 10, mais cette configuration est beaucoup moins stable que la précédente.

Les figures 10 et 11 sont des vues de dessus de deux exemples d'aérodyne selon l'invention à quatre (figure 10) ou trois (figure 11) bras porteurs 5a-5d ou 5a, 5e, 5f, de quatre ou trois soufflantes d'attitude 3a-3d ou 3a, 3e, 3f avec un empennage arrière pour soulager le travail de la soufflante d'attitude 3a et/ou de volets de tangage 6c et 6d pendant une translation horizontale de l'aérodyne. Dans sa configuration la plus simple, l'empennage ne comporte qu'un empennage horizontal 20 monté pivotant autour d'un axe parallèle à l'axe de tangage Y. Dans d'autres versions, il peut comporter un empennage vertical 21 pour s'orienter face au vent et/ ou un volet de portance 22 articulé sur l'arrière de l'empennage horizontal 20 pour en accentuer la cambrure et augmenter sa portance. Sur ces deux figures 10 et 11, les volets 6a, 6b, 6c et 6d représentés sont doublés par rapport à ceux des figures 8 et 9. Cela peut être nécessaire, surtout dans l'hypothèse d'une soufflante porteuse 1 à hélice unique la comme celle de la figure 9, qui nécessite un couple d'équilibrage en lacet plus important que dans le cas d'une soufflante porteuse 1 à deux hélices contrarotatives telles que 1a et 1b de la figure 8 par exemple.

La figure 12 est une vue schématique d'une soufflante porteuse non carénée 1 à une seule hélice la de diamètre Φ1 entraînée par un groupe motopropulseur 2 à moteur d'entraînement principal thermique M, qui comporte, en secours ou en appoint, (à usage transitoire), un petit moteur m' électrique ou thermique par l'intermédiaire d'un embrayage 73 ou/et 73', d'une roue libre 72 ou/et 72' et d'une transmission 71 ou/et 71' selon que l'entraînement s'effectue par le moteur M ou le moteur m' ou les deux simultanément, et de soufflantes d'attitude dont une seule soufflante électrique 3a est représentée avec son moteur électrique m, une seule hélice 31a de diamètre Φ2 et son carénage 30. Le petit moteur m' a une puissance plus faible que celle du moteur principal M, par exemple de l'ordre de 25 % à 50 % de celle du moteur M. Dans ce cas, en cas de panne du moteur principal M, la survie de l'aérodyne, avec sa charge utile, est assurée par le petit moteur m', capable en urgence et pendant quelques minutes de vol, et avec l'assistance de l'ensemble des soufflantes électriques 3, dont seule la soufflante 3a est représentée ici, de sauver l'aérodyne en permettant un atterrissage en urgence. En fonctionnement normal, l'hélice porteuse la est entraînée par le moteur M via l'embrayage 73, la roue libre 72, et la boîte de transmission 71 si le moteur m' est hors service. Le moteur M est démarré, puis embrayé, il peut ensuite faire tourner l'hélice la à la vitesse de rotation désirée grâce à la boîte de transmission 71, et, en cas d'arrêt du moteur M, la roue libre 72 permet à l'hélice la de ne pas être stoppée brutalement. Si le petit moteur m' n'est pas déjà démarré et entraîne l'hélice la par l'embrayage 73', la roue libre 72' et la transmission 71', qui ajoute sa puissance à celle du moteur M fournie par la transmission 71, quand le moteur M est défaillant, le petit moteur m' est démarré pour que sa puissance soit transmise à l'hélice 1a, et toutes les soufflantes d'attitude telle que 3a sont entraînées en continu et autant que possible à pleine puissance pour assurer la sustentation, dans une mesure compatible avec la stabilisation de l'aérodyne pour le sauver avec sa charge utile.

Si le petit moteur m' est électrique, il peut, avec l'assistance des soufflantes d'attitude électriques telles que 3a, apporter un surcroît de puissance insensible à l'altitude, et donc pouvant permettre la bonne réalisation d'une opération en altitude. Pour ces opérations, le rapport de la surface totale A2 des soufflantes d'attitude telles que 3a à la surface A1 de la soufflante porteuse 1 est compris entre 60 % et 100 %, et de préférence tel que A2/A1 > 70 %. De plus, de préférence, si p'1 est la densité surfacique de puissance (exprimée en KW/m²) du petit moteur m', soit Pm'/A1, où Pm' est la puissance du moteur m', et p2 est la densité surfacique de puissance des soufflantes d'attitude telles que 3a, soit Pm/A2 où Pm est la somme des puissances des moteurs m de toutes les soufflantes d'attitude, on choisit d'avoir des valeurs proches de p'1 et p2. Par exemple, p'1 et p2 satisfont à la double inégalité suivante : 0,5 x p'1 < p2 < 1,5 x p'1. Bien entendu, on pourrait avoir le même schéma avec deux hélices contrarotatives 1a et 1b de diamètres Φ1 à la place de la et deux hélices électriques 31a et 31b de diamètres Φ2 carénées ou non carénées à la place de 31a.

La figure 13 est un diagramme montrant l'évolution d'un index proportionnel au poids de l'ensemble des équipements électriques ((poids des moteurs électriques + poids des batteries) divisé par un poids de référence représentatif de la charge utile dans certaines conditions), dans deux configurations de diamètre Φ1 de la soufflante porteuse 1 (courbes Φ1/ Φ0 = 1,17 et Φ1/ Φ0 = 1,50) où Φ0 est un diamètre minimum de référence, et cela, en fonction du choix du ratio de surfaces entre la surface totale (A2) des soufflantes d'attitude électriques 3 et la surface (A1) de la soufflante porteuse 1. On constate que :
- plus le diamètre Φ1 est grand, plus la situation est favorable (l'index de poids précité diminue), mais cette option a des limites car plus Φ1/Φ0 est grand, plus l'encombrement de l'aérodyne augmente ainsi que les problèmes de tenue structurelle ;
- les courbes sont fortement non linéaires : en dessous d'un ratio minimum A2/A1 (vers 40%), l'index de poids diverge ; il s'agit là d'un point très important de l'invention puisqu'en effet, l'invention fait le choix d'organiser la situation de survie en dimensionnant les soufflantes électriques d'attitude 3, dites aussi de stabilisation et/ou de survie, pour porter au moins le poids de l'aérodyne sans charge utile, mais la condition pour atteindre cet objectif est d'avoir une surface totale A2 très significative en regard de la surface A1. En effet, si la surface A2 est trop faible en regard de A1, il faut augmenter la puissance des moteurs électriques 36 (m) des soufflantes d'attitude pour compenser cette faiblesse, ce qui augmente à la fois le poids des moteurs 36 (m) et celui des batteries assurant leur alimentation, et « in fine » augmente la charge, donc la puissance des moteurs 36. Cette situation peut diverger et conduire à un dimensionnement où la charge utile est entièrement consommée par le poids des moteurs électriques 36 (m) et des batteries associées.

Pour obtenir un poids optimal de matériel électrique (moteurs 36 + batteries), tout en gardant une taille raisonnable de la soufflante porteuse (Φ1/Φ0 < 1,2), il faut que le rapport A2/A1 soit de préférence supérieur à 70 %.

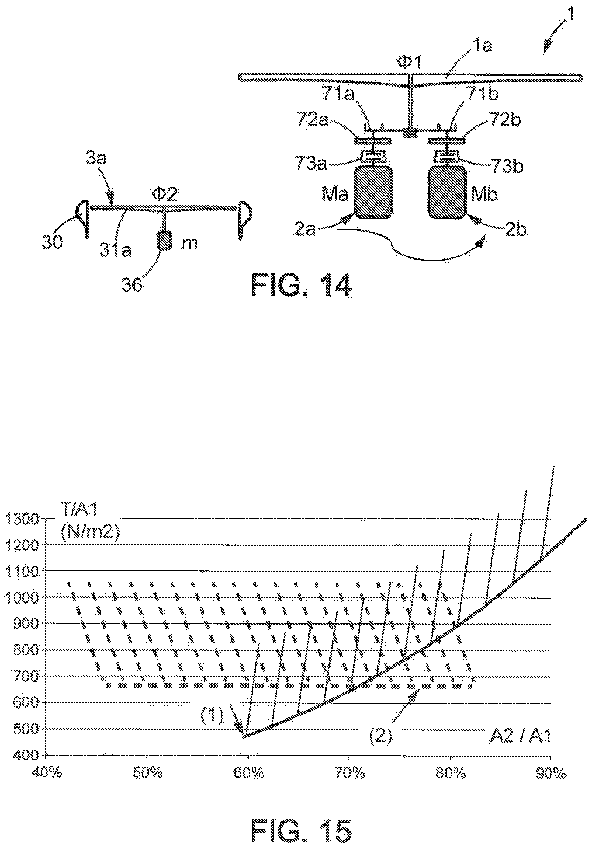

La figure 14 est une vue schématique d'une soufflante porteuse 1 à hélice multipales la de diamètre Φ1 avec un groupe motopropulseur à deux moteurs principaux d'entraînement (Ma, Mb) 2a et 2b, dont chacun est relié à la soufflante porteuse 1 par une boîte de transmission 71a ou 71b, une roue libre 72a ou 72b, un embrayage 73a ou 73b, et d'une soufflante électrique 3a avec son moteur 36 (m), une hélice 31a de diamètre Φ2 et son carénage 30. Dans cette réalisation, en cas de panne d'un des moteurs principaux 2a (Ma) ou 2b (Mb), la survie de l'aérodyne, éventuellement sans charge utile, est assurée par le moteur restant opérationnel et par l'ensemble des soufflantes électriques 3, dont une seule 3a est représentée ici. En fonctionnement normal, l'hélice porteuse la est donc entraînée par les moteurs 2a (Ma) et 2b (Mb) via deux embrayages 73a et 73b, deux roues libres 72a et 72b, et deux boîtes de transmission 71a et 71b. Chaque moteur 2a ou 2b est démarré, puis embrayé, un des deux moteurs 2b (Mb) sur la figure 14, est dans une relation « maître - esclave » symbolisée par une flèche sur la figure 14, par rapport au moteur « maître », c'est-à-dire que sa vitesse et la puissance délivrée sont « calquées » sur celles du moteur « maître ». Pour une usure symétrique des moteurs 2a (Ma) et 2b (Mb) et des équipements, on permutera à intervalles réguliers les rôles de maître et d'esclave entre les deux moteurs. Ces moteurs 2a et 2b font ensuite tourner l'hélice la à la vitesse de rotation désirée grâce aux boîtes de transmission 71a et 71b, et, en cas d'arrêt d'un des moteurs, la roue libre 72a ou 72b permet à l'hélice la de continuer à être entraînée par le moteur opérationnel sans être freinée par le moteur arrêté. Le moteur 2a (Ma) ou 2b (Mb) reste opérationnel et l'ensemble des soufflantes électriques 3, dites aussi de survie, assurent alors le sauvetage de l'aérodyne et de sa charge utile. Bien entendu, on peut avoir le même schéma avec deux hélices contrarotatives 1a et 1b de diamètres Φ1 dans la soufflante porteuse 1 à la place de la seule hélice la et deux hélices électriques d'attitude 31a et 31b, carénées ou non carénées, de diamètres Φ2 à la place de la seule hélice 31a dans chaque soufflante d'attitude telle que 3a.

La figure 15 est un diagramme montrant des zones d'exclusion en fonction des choix de charge rotorique (T/A1), T étant la charge maximum de l'aérodyne, et de ratio (A2/A1) de surfaces entre la surface totale A2 desdites soufflantes électriques 3 de stabilisation et/ou de survie et la surface A1 de la soufflante principale 1. Avantageusement, la charge (T/A1) du disque de la soufflante porteuse 1 est comprise entre 450N/m2 et 750 N/m2 (courbe (2)). Avantageusement, le rapport des surfaces A2/A1 entre la surface totale A2 des soufflantes d'attitude 3 et la surface A1 de la soufflante porteuse 1 est supérieur à 70 %.

La figure 16 est une vue schématique de côté d'un exemple d'aérodyne selon l'invention. L'aérodyne est proche de celui de la figure 14, mais avec les différences suivantes :
- la soufflante porteuse 1 comprend deux hélices coaxiales contrarotatives 1a et 1b non carénées et de même diamètre Φ1 et les soufflantes électriques 3' de stabilisation et/ou de survie comprennent des hélices coaxiales, contrarotatives 31 et 32 non carénées de même diamètre Φ2, qui sont elles-mêmes entraînées chacune par l'un respectivement de deux moteurs électriques ma et mb. Alternativement, les deux hélices 31 et 32 peuvent être entraînées collectivement par un ou des moteurs électriques avec une transmission contrarotative (non représentée sur la figure 16).

Les deux groupes motopropulseurs Ma et Mb entraînent chacun l'une respectivement des deux hélices 1a et 1b de la soufflante porteuse 1 de façon indépendante mais synchronisée. Cela permet d'éviter une transmission contrarotative. On peut aussi, le cas échéant, supprimer les roues libres puisque l'arrêt d'un des deux moteurs (Ma et Mb) n'a pas de conséquence sur le fonctionnement de l'autre moteur et de l'hélice qui lui est associée.

Enfin, les volets 6 sont surdimensionnés pour équilibrer le couple d'entraînement d'une seule hélice la ou 1b en situation de survie avec un des deux moteurs Ma et Mb en panne.

La figure 17 est une vue schématique de la soufflante porteuse 1 entraînée par deux groupes motopropulseurs Ma et Mb et associée à des soufflantes d'attitude électriques carénées dont on n'a représenté qu'une soufflante 3a avec ses composants. Dans cette version de l'aérodyne, les points principaux qui la distingue de l'architecture décrite en référence à la figure 16, sont :
- chacun des deux groupes motopropulseurs Ma et Mb entraîne l'ensemble des deux hélices coaxiales contrarotatives 1a et 1b de même diamètre Φ1 via une boîte de transmission contrarotative unique 70. Les inconvénients de cette architecture par rapport à celle de la figure 16, sont, d'une part, la nécessité d'avoir une transmission contrarotative (poids et coût élevés), et, d'autre part, la nécessité d'avoir une parfaite synchronisation entre les deux moteurs Ma et Mb sous une logique du type « maître - esclave », comme expliqué ci-dessus (symbolisé par la flèche entre Ma et Mb sur la figure 17) ;
- mais le principal avantage est que, en cas de panne d'un des moteurs Ma et Mb, le moteur restant opérationnel peut entraîner les deux hélices 1a et 1b dans une rotation contrarotative, au lieu d'une hélice unique comme pour la figure 16, et donc avec des couples équilibrés et avec un meilleur rendement de sustentation.

Les soufflantes axiales électriques telles que 3a sont carénées et équipées de deux hélices coaxiales contrarotatives 31a et 31b, de même diamètre Φ2, donc avec un rendement de sustentation optimum.

Dans cet exemple, chacune des deux hélices 31a et 32a de la soufflante d'attitude 3a est entraînée par l'un respectivement de deux petits moteurs électriques mₐ et m_{b}, de préférence identiques.

Les principaux composants électriques, et, éventuellement électroniques, en particulier les moteurs électriques mₐ et m_{b}, leurs batteries électriques d'alimentation, des contrôleurs de commande de ces moteurs et batteries, des connecteurs de liaison des moteurs aux batteries, ainsi qu'un ou plusieurs alternateurs (non représentés sur les figures) de recharge de batteries, entraîné(s) à partir d'un ou plusieurs moteurs thermiques, sont regroupés avec les moteurs principaux des groupes motopropulseurs Ma et Mb et la boîte de transmission 70, dans une enceinte 90 fermée thermostatée, dans la partie centrale de la structure porteuse 4, dans laquelle les composants électriques sont à proximité les uns des autres, ce qui facilite les transmissions entre eux de courants électriques, dont les intensités peuvent atteindre plusieurs centaines d'ampères. Chacun des moteurs électriques mₐ et m_{b} dans l'enceinte 90 est relié par une transmission mécanique à arbre tournant 80 à un renvoi d'angle mécanique 80a, monté au centre de la soufflante d'attitude 3a, pour l'entraînement en rotation contrarotatif des hélices 31a et 32a respectivement par les moteurs mₐ et m_{b}. Chaque arbre 80 est équipé d'une transmission à joint de cardan 80b permettant de rabattre ou replier une partie de l'arbre tournant 80 avec une partie du bras porteur 5a correspondant le long de la structure porteuse 4, pour réduire l'encombrement de l'aérodyne posé au sol et sa mise sous hangar ou son transport terrestre.

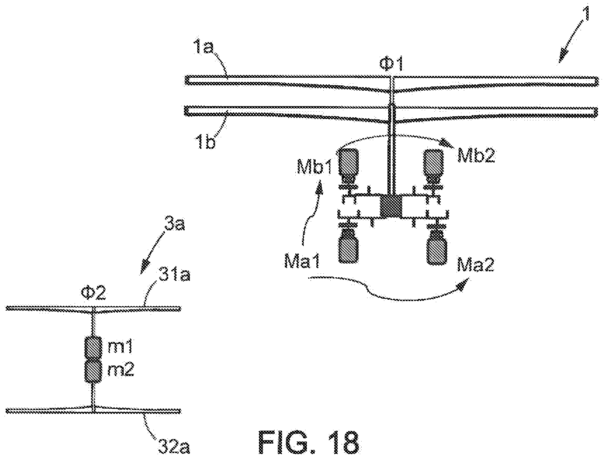

La figure 18 est une vue schématique d'une architecture de l'aérodyne selon l'invention qui est analogue à celle de la figure 16, sauf que l'on a deux paires de moteurs Ma1, Mb1 et Ma2, Mb2 pour entraîner chacune l'une respectivement des deux hélices 1a et 1b de la soufflante porteuse 1. La relation « maître - esclave » s'applique ici encore, symbolisée par les flèches sur la figure 18, mais elle implique une transitivité à la fois entre les deux groupes de moteurs Ma1, Mb1 et Ma2, Mb2 et à l'intérieur de chaque groupe de moteurs de Ma1 à Mb1 et de Ma2 à Mb2. On pourrait bien sûr multiplier le nombre de moteurs dans chaque groupe et en avoir plus de deux par groupe.

## Revendications

1. Aérodyne à décollage et atterrissage vertical, de type dit VTOL, comprenant :
- une structure porteuse (4), à laquelle sont structurellement reliés :
- au moins une soufflante porteuse (1) axiale, à axe de rotation (Z) sensiblement vertical et fixe par rapport à ladite structure porteuse (4), et apte à assurer la sustentation de l'aérodyne,
- au moins un groupe moto-sustentateur, comprenant au moins un moteur d'entraînement principal (2) de ladite soufflante porteuse (1),
- au moins trois soufflantes d'attitude (3), aptes à commander l'attitude de l'aérodyne en roulis et tangage, chaque soufflante d'attitude (3) étant une soufflante à motorisation électrique,
- chaque soufflante d'attitude (3) étant fixée à l'un respectivement d'une pluralité de bras (5) allongés, répartis en saillie latérale externe autour de ladite structure porteuse (4), à laquelle chaque bras (5) est relié par une partie d'extrémité dite interne, de sorte que l'axe de rotation de chaque soufflante d'attitude (3) est fixe par rapport à ladite structure porteuse (4), et que toutes les soufflantes d'attitude (3) sont situées à l'extérieur du volume occupé centralement par ladite soufflante porteuse (1),
- au moins une batterie d'alimentation des motorisations électriques des soufflantes d'attitude (3),
- un train d'atterrissage (4a), fixé sous ladite structure porteuse (4), et
- au moins une nacelle (10), apte à supporter une charge utile et/ou ladite batterie,
**caractérisé en ce que** des volets (6) de contrôle du lacet, réglables en incidence, sont portés par au moins un des bras (5) porteurs des soufflantes d'attitude (3), et de préférence par le ou les bras (5) porteurs orientés parallèlement au sens de déplacement de l'aérodyne.

2. Aérodyne selon la revendication 1, **caractérisé en ce que** ledit au moins un moteur d'entraînement principal (2) de ladite soufflante porteuse (1) est un moteur à combustion interne.

3. Aérodyne selon l'une quelconque des revendications 1 et 2, **caractérisé en ce que** ladite soufflante porteuse (1) est une soufflante comprenant deux hélices multipales (1a, 1b) coaxiales et contrarotatives, à pas fixe ou collectivement variable.

4. Aérodyne selon l'une quelconque des revendications 1 à 3 **caractérisé en ce que** le centre de gravité dudit au moins un moteur d'entraînement principal (1) est situé verticalement sous ladite soufflante porteuse (1) et au-dessus du plan formé par des hélices (31) desdites soufflantes d'attitude (3).

5. Aérodyne selon l'une quelconque des revendications 1 à 4, **caractérisé en ce qu'**un moteur de secours et/ou d'appoint (m'), de puissance plus faible que celle dudit au moins un moteur d'entraînement principal (M) de ladite soufflante porteuse (1), de préférence de l'ordre de 25 % à 50 % de celle dudit moteur principal (M), est associé audit moteur principal (M), par une transmission, de préférence avec embrayage(s) et roue(s) libre(s) (71, 72, 73, 71', 72', 73') permettant d'appliquer sélectivement la somme des puissances dudit moteur principal (M) et dudit moteur de secours et/ou d'appoint (m') sur la soufflante porteuse (1), ou, en cas de panne dudit moteur principal (M), la seule puissance du moteur de secours et/ou d'appoint (m'), la soufflante porteuse (1) étant alors assistée par les soufflantes d'attitude (3), dont la motorisation électrique est dimensionnée pour permettre la prise en charge de l'aérodyne avec sa charge utile.

6. Aérodyne selon l'une quelconque des revendications 1 à 5 **caractérisé par le fait que** les soufflantes d'attitude (3a, 3b, 3c, 3d) sont des soufflantes carénées, ladite au moins une soufflante porteuse (1) étant non carénée et, de préférence, protégée par une structure de protection (8) ajourée.

7. Aérodyne selon l'une quelconque des revendications 1 à 5 **caractérisé par le fait que** les soufflantes d'attitude (3', 3'a) sont des soufflantes non carénées, de même que ladite au moins une soufflante porteuse (1), qui est de préférence, protégée par une structure de protection (8) ajourée.

8. Aérodyne selon la revendication 6 ou 7 **caractérisé par le fait que** chaque soufflante d'attitude (3a, 3') comprend deux hélices multipales coaxiales (31a, 32a ; 31, 32) et contrarotatives, entraînées chacune par l'un respectivement de deux moteurs électriques (mₐ, m_{b}), ou collectivement par un ou des moteurs électriques.

9. Aérodyne selon l'une quelconque des revendications 1 à 8, **caractérisé par le fait que** la surface totale (A2) des soufflantes d'attitude (3) est supérieure à 35 % de la surface (A1) de ladite soufflante porteuse (1), de préférence comprise entre 60 % et 100 % de la surface de ladite soufflante porteuse (1).

10. Aérodyne selon l'une quelconque des revendications 1 à 9, **caractérisé par le fait que** ledit groupe moto-sustentateur comprend au moins deux moteurs (Ma, Mb) ou groupes de moteurs de puissance sensiblement équivalente, comportant chacun en série, avant une transmission de puissance (71a), 71b) à la soufflante porteuse (1), un embrayage (73a, 73b) et une roue libre (72a, 72b) de façon à ce que, lorsqu'un moteur (Ma, Mb) ou groupe de moteurs est en panne, l'entraînement de la soufflante porteuse (1) est assuré par l'autre moteur (Mb, Ma) ou groupe de moteurs en « débrayant » le moteur ou groupe de moteurs en panne.

11. Aérodyne selon la revendication 10, **caractérisé en ce que** les deux moteurs (Ma, Mb) ou groupes de moteurs sont gérés selon une commande du type « maître - esclave ».

12. Aérodyne selon les revendications 3 et 11 **caractérisé en ce que** chaque moteur ou groupe de moteurs (Ma1, Mb1 ; Ma2, Mb2) entraîne respectivement l'une des hélices (1a, 1b) multipales coaxiales de la soufflante porteuse (1) de façon contrarotative en évitant ainsi une transmission contrarotative.

13. Aérodyne selon l'une quelconque des revendications 1 à 12 **caractérisé en ce qu'**en aval de la ou des hélices (1a, 1b) multipales de ladite soufflante porteuse (1), lesdits volets (6) réglables en incidence sont aptes à ajuster le redressement du flux d'air en sortie de ladite soufflante porteuse (1) et à adapter le couple redresseur aux variations du couple en réaction au couple d'entraînement de ladite ou desdites hélices (1a, 1b).

14. Aérodyne selon l'une quelconque des revendications 1 à 12, **caractérisé en ce que** la soufflante porteuse (1) ne comprend qu'une hélice multipales (1a), à pas fixe ou à pas variable, sans redresseur et que des volets (6a, 6b) réglables en incidence et portés par au moins un des bras (5a, 5b) porteurs des soufflantes d'attitude (3a, 3b) équilibrent le couple moteur.

15. Aérodyne selon l'une quelconque des revendications 1 à 6 et 8 à 14, **caractérisé en ce que** les soufflantes d'attitude carénées (3a, 3b, 3c, 3d) sont fixées sur leurs bras porteurs (5a, 5b, 5c, 5d) de sorte que les centres de poussée des soufflantes d'attitude (3a, 3b, 3c, 3d) soient sensiblement dans un plan horizontal sensiblement en dessous du centre de gravité de l'aérodyne, de façon à ce que le moment dit de captation exercé en situation de vent latéral, sur le carénage (30) des soufflantes d'attitude par rapport au centre de gravité soit peu important.

16. Aérodyne selon l'une quelconque des revendications 1 à 15 **caractérisé en ce que** la charge utile (W) est suspendue par un système (9) articulé en roulis et en tangage à un niveau vertical proche du centre de gravité de l'aérodyne hors charge utile, de façon à conserver une position verticale stable du centre de gravité sous charge en roulis et tangage.

17. Aérodyne selon l'une quelconque des revendications 1 à 16, **caractérisé en ce que** les bras (5) porteurs des soufflantes d'attitude (3) sont repliables et/ou démontables, lorsque l'aérodyne est posé.

18. Aérodyne selon l'une quelconque des revendications 1 à 17, **caractérisé en ce que** la charge (T/A1) du disque de la soufflante porteuse (1) est comprise entre 450 N/m2 et 750 N/m2.

19. Aérodyne selon l'une quelconque des revendications 1 à 18, **caractérisé en ce que** des composants électriques et électroniques de l'aérodyne, comprenant au moins les moteurs électriques (36 ; m1, m2 ; mₐ, m_{b}) et batteries d'alimentation des soufflantes d'attitude (3), ainsi que des contrôleurs de commande des moteurs, des connecteurs de liaison desdites batteries auxdits moteurs, et au moins un alternateur de recharge des batteries sont regroupés dans une enceinte (90) fermée, de préférence thermostatée, agencée en zone sensiblement centrale de ladite structure porteuse (4), et reliée à chaque soufflante d'attitude, pour l'entraînement de sa ou ses hélices (31a, 32a), par une transmission mécanique à arbre tournant (80), comportant, de préférence, un raccord à joint de cardan (80b) permettant le repliage ou rabattement d'au moins une partie dudit arbre tournant avec au moins une partie dudit bras porteur (5) correspondant, et par rapport à ladite structure porteuse (4).

20. Aérodyne selon l'une quelconque des revendications 1 à 19, **caractérisé par le fait qu'**un bras porteur (5a) de soufflante d'attitude (3a) et situé dans un plan défini par l'axe de rotation (z) de la soufflante porteuse (1) et par l'axe (x) de déplacement longitudinal de l'aérodyne et en arrière de l'aérodyne est aussi porteur d'un empennage horizontal (20), de façon à soulager le travail de ladite soufflante d'attitude (3a) en situation de déplacement longitudinal de l'aérodyne.

21. Aérodyne selon l'une quelconque des revendications 1 à 20, **caractérisé en ce que** la partie périphérique amont (30a) du carénage (30) desdites soufflantes d'attitude (3a) est renflée radialement vers l'extérieur sur sa périphérie et selon un profil arrondi et convexe, apte à réduire le coefficient de traînée par rapport à un vent relatif latéral, la partie aval (30b) dudit carénage (30) ayant une face externe sensiblement cylindrique de section transversale circulaire.

22. Aérodyne selon l'une quelconque des revendications précédentes telle que rattachée à la revendication 5, **caractérisé en ce que** ledit moteur de secours et/ou d'appoint (m') est un moteur électrique, et sa puissance et celle des moteurs électriques des soufflantes d'attitude (3) apportent un surcroît de puissance insensible à l'altitude au cours du vol de l'aérodyne.

23. Aérodyne selon l'une quelconque des revendications 5 et 22, **caractérisé en ce que** ladite soufflante porteuse (1) entraînée par ledit moteur de secours et/ou d'appoint (m') et lesdites soufflantes d'attitude (3) ont des densités surfaciques de puissance respectivement p'1 et p2 telles que 0,5 x p'1 < p2 < 1,5 x p'1.

## Patentansprüche

1. Vertikal startendes und landendes Aerodyn des sogenannten VTOL-Typs, aufweisend:
- eine Trägerstruktur (4), mit der strukturell verbunden sind:
- mindestens ein axiales Trägergebläse (1), das eine im Wesentlichen vertikale und bezüglich der Trägerstruktur (4) ortsfeste Rotationsachse (Z) hat und fähig ist, den Auftrieb des Aerodyns sicherzustellen,
- mindestens eine Auftriebsmotorgruppe, die mindestens einen Hauptantriebsmotor (2) des Trägergebläses (1) aufweist,
- mindestens drei Fluglagegebläse (3), die fähig sind, die Roll- und Nicklage des Aerodyns zu steuern, wobei jedes Fluglagegebläse (3) ein Gebläse mit elektrischer Motorisierung ist,
- wobei jedes Fluglagegebläse (3) an einem jeweiligen von mehreren länglichen Armen (5) angebracht ist, die lateral nach außen vorspringend um die Trägerstruktur (4) herum verteilt sind, mit welcher jeder Arm (5) über einen sogenannten inneren Endabschnitt verbunden ist, so dass die Rotationsachse jedes Fluglagegebläses (3) bezüglich der Trägerstruktur (4) ortsfest ist und alle Fluglagegebläse (3) außerhalb des Volumens angeordnet sind, das von dem Trägergebläse (1) zentral besetzt wird,
- mindestens eine Versorgungsbatterie zur Versorgung der elektrischen Motorisierungen der Fluglagegebläse (3),
- ein an der Trägerstruktur (4) angebrachtes Landegestell (4a),
- mindestens eine Gondel (10), die fähig ist, eine Nutzlast und/oder die Batterie zu tragen,
**dadurch gekennzeichnet, dass** winkelverstellbare Klappen (6), die zur Steuerung des Gierens sind, von mindestens einem der Trägerarme (5) der Fluglagegebläse (3) getragen werden, und vorzugsweise von dem oder den Trägerarmen (5), die parallel zur Fortbewegungsrichtung des Aerodyns sind.

2. Aerodyn nach Anspruch 1, **dadurch gekennzeichnet, dass** der mindestens eine Hauptantriebsmotor (2) des Trägergebläses (1) ein Verbrennungsmotor ist.

3. Aerodyn nach einem der Ansprüche 1 und 2, **dadurch gekennzeichnet, dass** das Trägergebläse (1) ein Gebläse ist, das zwei koaxiale und gegenläufige Mehrblatt-Propeller (1a, 1b), die nichtverstellbar oder kollektiv verstellbar sind, aufweist.

4. Aerodyn nach einem der Ansprüche 1 bis 3, **dadurch gekennzeichnet, dass** das Schwerkraftzentrum des mindestens einen Hauptantriebsmotors (1) vertikal unterhalb des Trägergebläses (1) und oberhalb der Ebene, die von Propellern (31) der Fluglagegebläse (3) gebildet wird, angeordnet ist.

5. Aerodyn nach einem der Ansprüche 1 bis 4, **dadurch gekennzeichnet, dass** ein Sicherheits- und/oder Zusatzmotor (m'), dessen Leistung geringer als die des mindestens einen Hauptantriebsmotors (M) des Trägergebläses (1), vorzugsweise in der Größenordnung von 25% bis 50% derjenigen des Hauptmotors ist, über eine Transmission, vorzugsweise mit Kupplung(en) und Freilaufrolle(n) (71, 72, 73, 71', 72', 73'), mit dem Hauptmotor gekoppelt ist, was erlaubt, wahlweise die Summe der Leistungen des Hauptmotors (M) und des Sicherheits- und/oder Zusatzmotors (m') auf das Trägergebläse (1) anzuwenden, oder im Fall eines Versagens des Hauptmotors (M) nur die Leistung des Sicherheits- und/oder Zusatzmotors (m'), wobei das Trägergebläse (1) dann von den Fluglagegebläsen (3) unterstützt wird, deren elektrische Motorisierung bemessen ist, um die Lastübernahme des Aerodyns einschließlich seiner Nutzlast zu erlauben.

6. Aerodyn nach einem der Ansprüche 1 bis 5, **dadurch gekennzeichnet, dass** die Fluglagegebläse (3a, 3b, 3c, 3d) stromlinienförmige Gebläse sind, wobei das mindestens eine Trägergebläse (1) nichtstromlinienförmig ist und vorzugsweise mittels einer durchbrochenen Schutzstruktur (8) geschützt ist.

7. Aerodyn nach einem der Ansprüche 1 bis 5, **dadurch gekennzeichnet, dass** die Fluglagegebläse (3', 3'a) nichtstromlinienförmige Gebläse sind, ebenso wie das mindestens eine Trägergebläse (1), das vorzugsweise mittels einer durchbrochenen Schutzstruktur (8) geschützt ist.

8. Aerodyn nach Anspruch 6 oder 7, **dadurch gekennzeichnet, dass** jedes Fluglagegebläse (3a, 3') zwei koaxiale und gegenläufige Mehrblatt-Propeller (31a, 32a; 31, 32) aufweist, die jeweils von einem jeweiligen von zwei Elektromotoren (mₐ, m_{b}) oder kollektiv von einem Elektromotor oder von Elektromotoren angetrieben werden.

9. Aerodyn nach einem der Ansprüche 1 bis 8, **dadurch gekennzeichnet, dass** die Gesamtfläche (A2) der Fluglagegebläse (3) größer als 35% der Fläche (A1) des Trägergebläses (1), vorzugsweise zwischen 60% und 100% der Fläche des Trägergebläses (1), ist.

10. Aerodyn nach einem der Ansprüche 1 bis 9, **dadurch gekennzeichnet, dass** die Auftriebsmotorgruppe mindestens zwei Motoren (Ma, Mb) oder Motorgruppen im Wesentlichen gleicher Leistung aufweist, von denen jeder oder jede vor einer Transmission (71a, 71b) von Leistung auf das Trägergebläse (1) seriell eine Kupplung (73a, 73b) und eine Freilaufrolle (72a, 72b) aufweist, so dass, wenn ein Motor (Ma, Mb) oder eine Motorgruppe versagt, durch "Ausrücken" des nichtfunktionierenden Motors oder der nichtfunktionierenden Motorgruppe der Antrieb des Trägergebläses (1) von dem anderen Motor (Mb, Ma) oder der anderen Motorgruppe sichergestellt wird.

11. Aerodyn nach Anspruch 10, **dadurch gekennzeichnet, dass** die zwei Motoren (Ma, Mb) oder Motorgruppen unter einem Befehl des Typs "Master-Slave" gesteuert werden.

12. Aerodyn nach den Ansprüchen 3 und 11, **dadurch gekennzeichnet, dass** jeder Motor oder jede Motorgruppe (Ma1, Mb1; Ma2, Mb2) jeweils eine der koaxialen Mehrblatt-Propeller (1a, 1b) des Trägergebläses (1) auf gegenläufige Weise antreibt, um so eine gegenläufige Transmission zu vermeiden.

13. Aerodyn nach einem der Ansprüche 1 bis 12, **dadurch gekennzeichnet, dass** stromabwärts des oder der Mehrblatt-Propeller (1a, 1b) des Trägergebläses (1) die winkelverstellbaren Klappen (6) fähig sind, die Gleichrichtung des Luftstroms am Ausgang des Trägergebläses (1) einzustellen und das Gleichrichter-Drehmoment an die Variationen des Drehmoments in Reaktion auf das Antriebsdrehmoment des oder der Propeller (1a, 1b) anzupassen.

14. Aerodyn nach einem der Ansprüche 1 bis 12, **dadurch gekennzeichnet, dass** das Trägergebläse (1) nur einen einzigen nichtverstellbaren oder verstellbaren Mehrblatt-Propeller (1a) ohne Gleichrichter aufweist und winkelverstellbare Klappen (6a, 6b), die von mindestens einem der Trägerarme (5a, 5b) der Fluglagegebläse (3a, 3b) getragen werden, das Motordrehmoment ausgleichen.

15. Aerodyn nach einem der Ansprüche 1 bis 6 und 8 bis 14, **dadurch gekennzeichnet, dass** die stromlinienförmigen Fluglagegebläse (3a, 3b, 3c, 3d) an ihren Trägerarmen (5a, 5b, 5c, 5d) auf eine Weise angebracht sind, dass die Schubzentren der Fluglagegebläse (3a, 3b, 3c, 3d) im Wesentlichen in einer horizontalen Ebene im Wesentlichen unterhalb des Schwerkraftzentrums des Aerodyns sind, so dass das sogenannte Kaptationsmoment, das in einer Seitenwindsituation auf die Verkleidung (30) der Fluglagegebläse bezüglich des Schwerkraftzentrums wirkt, wenig groß ist.

16. Aerodyn nach einem der Ansprüche 1 bis 15, **dadurch gekennzeichnet, dass** die Nutzlast (W) über ein System (9) aufgehängt ist, das rollend und nickend in einer vertikalen Höhe nahe an dem Schwerkraftzentrum des Aerodyns ohne Nutzlast gelenkig angebracht ist, um eine stabile vertikale Position des Schwerkraftzentrums unter rollender und nickender Last beizubehalten.

17. Aerodyn nach einem der Ansprüche 1 bis 16, **dadurch gekennzeichnet, dass** die Trägerarme (5) der Fluglagegebläse (3) zurückklappbar und/oder abnehmbar sind, wenn das Aerodyn gelandet ist.

18. Aerodyn nach einem der Ansprüche 1 bis 17, **dadurch gekennzeichnet, dass** die Lastkraft (T/A1) der Scheibe des Trägergebläses (1) zwischen 450 N/m2 du 750 N/m2 beträgt.

19. Aerodyn nach einem der Ansprüche 1 bis 18, **dadurch gekennzeichnet, dass** elektrische und elektronische Komponenten des Aerodyns, die mindestens die Elektromotoren (36; m1, m2; mₐ, m_{b}) und Versorgungsbatterien der Fluglagegebläse (3) sowie Motorantriebssteuerungen, Verbindungsleitungen zum Verbinden der Batterien mit den Motoren und mindestens einen Wechselstromgenerator zum Wiederaufladen der Batterien aufweisen, in einem geschlossenen, vorzugsweise thermostabilisierten Gehäuse (90) gruppiert sind, das in einer im Wesentlichen zentralen Zone der Trägerstruktur (4) angeordnet ist und mit jedem Fluglagegebläse verbunden ist, um über eine mechanische Drehwelle-Transmission (80) seinen oder seine Propeller (31a, 32a) anzutreiben, wobei die mechanische Drehwelle-Transmission (80) vorzugsweise eine Kardangelenkverbindung (80b) aufweist, die das Umklappen oder Zurüccklappen mindestens eines Teils der Drehwelle einschließlich mindestens eines Teils des entsprechenden Trägerarms (5) bezüglich der Trägerstruktur (4) erlaubt.

20. Aerodyn nach einem der Ansprüche 1 bis 19, **dadurch gekennzeichnet, dass** ein Trägerarm (5a) eines Fluglagegebläses (3a), der in einer durch die Rotationsachse (z) des Trägergebläses (1) und durch die Längsbewegungsachse (x) des Aerodyns definierten Ebene und am Heck des Aerodyns angeordnet ist, auch Träger eines Höhenleitwerks (20) ist, um die Arbeit dieses Fluglagegebläses (3a) in der Situation einer Längsbewegung des Aerodyns zu erleichtern.

21. Aerodyn nach einem der Ansprüche 1 bis 20, **dadurch gekennzeichnet, dass** der stromaufwärtsseitige periphere Teil (30a) der Verkleidung (30) der Fluglagegebläse (3a) an seinem Umfang radial auswärts und gemäß einem abgerundeten und konvexen Profil gewölbt ist, das fähig ist, den auf einen relativen Seitenwind bezogenen Luftwiderstandskoeffizienten zu verringern, wobei der stromabwärtsseitige Teil (30b) der Verkleidung (30) eine im Wesentlichen zylindrische Außenfläche mit einem kreisförmigen Querschnitt hat.

22. Aerodyn nach einem der vorstehenden Ansprüche, wenn anknüpfend an Anspruch 5, **dadurch gekennzeichnet, dass** der Sicherheits- und/oder Zusatzmotor (m') ein Elektromotor ist und seine Leistung und die der Elektromotoren der Fluglagegebläse (3) einen Leistungszuwachs bringen, der unempfindlich gegenüber der Flughöhe des Aerodyns ist.

23. Aerodyn nach einem der Ansprüche 5 und 22, **dadurch gekennzeichnet, dass** das von dem Sicherheits- und/oder Zusatzmotor (m') angetriebene Trägergebläse (1) und die Fluglagegebläse (3) jeweilige Oberflächenleistungsdichten p'1 bzw. p2 haben, derart, dass 0,5*p'1 < p2 < 1,5*p'1 ist.

## Claims

1. Vertical take-off and landing aerodyne, of the type known as VTOL, comprising:
- a supporting structure (4), to which are structurally connected:
- at least one supporting axial blower (1), with an axis of rotation (Z) that is substantially vertical and fixed relative to said supporting structure (4), and capable of ensuring the lift-generation of the aerodyne,
- at least one motor-lift unit, comprising at least one main drive motor (2) of said supporting blower (1),
- at least three attitude blowers (3), capable of controlling the attitude of the aerodyne in terms of roll and pitch, each attitude blower (3) being a blower with an electrical motor,
- each attitude blower (3) being attached, respectively, to one of a plurality of elongate arms (5) that are distributed in a laterally, outwardly projecting manner around said supporting structure (4), to which each arm (5) is connected by an end portion called inner, so that the axis of rotation of each attitude blower (3) is fixed relative to said supporting structure (4), and that all the attitude blowers (3) are located outside the space centrally occupied by said supporting blower (1),
- at least one battery for supplying power to the electrical motors of the attitude blowers (3),
- a landing gear (4a), attached under said supporting structure (4), and
- at least one nacelle (10), capable of holding a payload and/or said battery,
**characterized in that** yaw control flaps (6), the angle of attack of which can be adjusted, are supported by at least one of the arms (5) supporting the attitude blowers (3), and preferably by the supporting arm(s) (5) oriented parallel to the direction of movement of the aerodyne.

2. Aerodyne according to claim 1, **characterized in that** said at least one main drive motor (2) of said supporting blower (1) is an internal combustion engine.

3. Aerodyne according to either one of claims 1 and 2, **characterized in that** said supporting blower (1) is a blower comprising two coaxial contra-rotating multiblade propellers (1a, 1b), with fixed or collectively variable pitch.

4. Aerodyne according to any one of claims 1 to 3, **characterized in that** the centre of gravity of said at least one main drive motor (1) is located vertically below said supporting blower (1) and above the plane formed by propellers (31) of said attitude blowers (3).

5. Aerodyne according to any one of claims 1 to 4, **characterized in that** an emergency and/or auxiliary motor (m'), of lower power than that of said at least one main drive motor (M) of said supporting blower (1), preferably of the order of 25% to 50% of that of said main motor (M), is associated with said main motor (M), through a transmission, preferably with clutch(es) and freewheel(s) (71, 72, 73, 71', 72', 73') making it possible to selectively apply the sum of the power of said main motor (M) and said emergency and/or auxiliary motor (m') to the supporting blower (1), or, in the case of breakdown of said main motor (M), the power of the emergency and/or auxiliary motor (m') only, the supporting blower (1) then being assisted by the attitude blowers (3), the electrical motors of which are dimensioned for allowing the takeover of the aerodyne with its payload.

6. Aerodyne according to any one of claims 1 to 5, **characterized in that** the attitude blowers (3a, 3b, 3c, 3d) are faired blowers, said at least one supporting blower (1) not being faired and, preferably, protected by an apertured protective structure (8).

7. Aerodyne according to any one of claims 1 to 5, **characterized in that** the attitude blowers (3', 3'a) are unfaired blowers, similarly to said at least one supporting blower (1), which is preferably protected by an apertured protective structure (8).

8. Aerodyne according to claim 6 or 7, **characterized in that** each attitude blower (3a, 3') comprises two coaxial contra-rotating multiblade propellers (31a, 32a; 31, 32), each driven by one of two electrical motors (mₐ, m_{b}) respectively, or collectively by one or more electrical motors.

9. Aerodyne according to any one of claims 1 to 8, **characterized in that** the total surface area (A2) of the attitude blowers (3) is greater than 35% of the surface area (A1) of said supporting blower (1), preferably comprised between 60% and 100% of the surface area of said supporting blower (1).

10. Aerodyne according to any one of claims 1 to 9, **characterized in that** said motor-lift unit comprises at least two motors (Ma, Mb) or motor groups having substantially equivalent power, each comprising in series, before a power transmission (71a, 71b) to the supporting blower (1), a clutch (73a, 73b) and a freewheel (72a, 72b) so that, when a motor (Ma, Mb) or motor group has broken down, the drive of the supporting blower (1) is ensured by the other motor (Mb, Ma) or motor group by "disengaging" the broken-down motor or motor group.

11. Aerodyne according to claim 10, **characterized in that** the two motors (Ma, Mb) or motor groups are managed according to a "master-slave" type control.

12. Aerodyne according to claims 3 and 11, **characterized in that** each motor or motor group (Ma1, Mb1; Ma2, Mb2) respectively drives one of the coaxial multiblade propellers (1a, 1b) of the supporting blower (1) in a contra-rotating manner, thus avoiding a contra-rotating transmission.

13. Aerodyne according to any one of claims 1 to 12, **characterized in that** downstream of the multiblade propeller (s) (1a, 1b) of said supporting blower (1), said flaps (6), the angle of attack of which is adjustable, are able to adjust the airflow recovery at the output of said supporting blower (1) and to adapt the righting torque to the variations in the torque, in response to the drive torque of said propeller or propellers (1a, 1b).

14. Aerodyne according to any one of claims 1 to 12, **characterized in that** the supporting blower (1) comprises only one multiblade propeller (1a), with a fixed pitch or a variable pitch, without righting means and **in that** flaps (6a, 6b), the angle of attack of which is adjustable and which are supported by at least one of the supporting arms (5a, 5b) of the attitude blowers (3a, 3b), balance the motor torque.

15. Aerodyne according to any one of claims 1 to 6 and 8 to 14, **characterized in that** the faired attitude blowers (3a, 3b, 3c, 3d) are attached to their supporting arms (5a, 5b, 5c, 5d) such that the centres of thrust of the attitude blowers (3a, 3b, 3c, 3d) are substantially in a horizontal plane substantially below the centre of gravity of the aerodyne, so that the moment known as momentum drag, which is exerted on the fairing (30) of the attitude blowers in a side wind situation relative to the centre of gravity, is of little importance.

16. Aerodyne according to any one of claims 1 to 15, **characterized in that** the payload (W) is suspended by a system (9) articulated in terms of roll and pitch at a vertical level close to the centre of gravity of the aerodyne excluding payload, so as to retain a stable vertical position of the centre of gravity under load in terms of roll and pitch.

17. Aerodyne according to any one of claims 1 à 16, **characterized in that** the arms (5) bearing the attitude blowers (3) can be folded and/or removed, when the aerodyne is on the ground.

18. Aerodyne according to any one of claims 1 to 17, **characterized in that** the disc loading (T/A1) of the supporting blower (1) is comprised between 450 N/m2 and 750 N/m2.

19. Aerodyne according to any one of claims 1 to 18, **characterized in that** electrical and electronic components of the aerodyne, comprising at least the electrical motors (36; m1, m2; mₐ, m_{b}) and power supply batteries of the attitude blowers (3), as well as controllers for controlling the motors, connectors for connecting said batteries to said motors and at least one alternator for recharging the batteries, are grouped in a closed enclosure (90), preferably thermostatically controlled, arranged in a substantially central area of said supporting structure (4), and connected to each attitude blower, for driving its propeller(s) (31a, 32a), through a rotating-shaft mechanical transmission (80) preferably comprising a universal joint connection (80b) allowing at least part of said rotating shaft to be folded or hinged back with at least part of said corresponding supporting arm (5), relative to said supporting structure (4) .

20. Aerodyne according to any one of claims 1 to 19, **characterized in that** a supporting arm (5a) of an attitude blower (3a) located in a plane defined by the axis of rotation (z) of the supporting blower (1) and by the axis (x) of longitudinal movement of the aerodyne and behind the aerodyne also bears a horizontal empennage (20), so as to ease the work of said attitude blower (3a) in a situation of longitudinal movement of the aerodyne.

21. Aerodyne according to any one of claims 1 to 20, **characterized in that** the upstream peripheral portion (30a) of the fairing (30) of said attitude blowers (3a) bulges radially outwards on its periphery in a rounded convex profile, capable of reducing the drag coefficient relative to a lateral relative wind, the downstream portion (30b) of said fairing (30) having an outer face that is substantially cylindrical with a circular cross-section.

22. Aerodyne according to any one of the preceding claims as dependent on claim 5, **characterized in that** said emergency and/or auxiliary motor (m') is an electrical motor, and its power and that of the electrical motors of the attitude blowers (3) contribute additional power that is insensitive to altitude during the flight of the aerodyne.

23. Aerodyne according to any one of claims 5 and 22, **characterized in that** said supporting blower (1) driven by said emergency and/or auxiliary motor (m') and said attitude blowers (3) have power flux densities p'1 and p2 such that 0.5 x p'1 < p2 < 1.5 x p'1, respectively.
